(19) **Europäisches Patentamt / European Patent Office / Office européen des brevets**

(11) **EP 4 765 687 A1**

(12) **EUROPEAN PATENT APPLICATION**
published in accordance with Art. 153(4) EPC

(43) Date of publication:
**24.06.2026 Bulletin 2026/26**

(21) Application number: **24870438.9**

(22) Date of filing: **10.09.2024**

(51) International Patent Classification (IPC):
**H04B 17/345** (2015.01)

(52) Cooperative Patent Classification (CPC):
**H04B 17/345; H04W 8/22; H04W 8/24;
H04W 24/08; H04W 24/10**

(86) International application number:
**PCT/CN2024/118025**

(87) International publication number:
**WO 2025/066893 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311290494**

(71) Applicant: **HUAWEI TECHNOLOGIES CO., LTD.
Shenzhen 518129 (CN)**

(72) Inventors:
• **YANG, Liu**
  **Shenzhen, Guangdong 518129 (CN)**

• **ZHANG, Xiaoyu**
  **Shenzhen, Guangdong 518129 (CN)**
• **LIAO, Shuri**
  **Shenzhen, Guangdong 518129 (CN)**
• **YU, Tong**
  **Shenzhen, Guangdong 518129 (CN)**
• **DOU, Shengyue**
  **Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **INFORMATION PROCESSING METHOD AND RELATED APPARATUS**

(57) Embodiments of this application provide an information processing method and a related apparatus. In the method, a first network device receives terminal information of at least one second network device, where the terminal information includes a quantity of terminals served by the at least one second network device, and location information and equivalent isotropic radiated power information of the terminals served by the at least one second network device; and determines, based on the terminal information, total uplink interference generated to the first network device by the terminals served by the at least one second network device. In embodiments of this application, total uplink interference generated to a network device by terminals served by another network device can be obtained, thereby helping perform corresponding interference coordination based on the total uplink interference.

```
┌─────────────────────┐                    ┌──────────────────────┐ ...
│ First network device│                    │  At least one        │
└─────────────────────┘                    │  second network device│
                                           └──────────────────────┘
           │◄────────── S101: Terminal information ───────────────│
  ┌────────────────────────────────────────┐
  │ S102: The first network device          │
  │ determines, based on the terminal       │
  │ information, total uplink interference   │
  │ generated to the first network device by │
  │ terminals served by the at least one     │
  │ second network device                    │
  └────────────────────────────────────────┘
  ┌ ─ ─ ─ ─ ─ ─ ─ ─ ─ ─ ─ ─ ─ ─ ─ ─ ─ ─ ─ ┐
  │ S103: The first network device          │
  │ determines, based on the total uplink    │
  │ interference generated to the first      │
  │ network device by the terminals served   │
  │ by the at least one second network       │
  │ device, whether to perform interference  │
  │ coordination                             │
  └ ─ ─ ─ ─ ─ ─ ─ ─ ─ ─ ─ ─ ─ ─ ─ ─ ─ ─ ─ ┘
  ┌ ─ ─ ─ ─ ─ ─ ─ ─ ─ ─ ─ ─ ─ ─ ─ ─ ─ ─ ─ ┐
  │ S104: The first network device performs │
  │ the interference coordination            │
  └ ─ ─ ─ ─ ─ ─ ─ ─ ─ ─ ─ ─ ─ ─ ─ ─ ─ ─ ─ ┘
```

FIG. 8

**Description**

This application claims priority to Chinese Patent Application No. 202311290494.7, filed with the China National Intellectual Property Administration on September 28, 2023 and entitled "INFORMATION PROCESSING METHOD AND RELATED APPARATUS", which is incorporated herein by reference in its entirety.

**TECHNICAL FIELD**

This application relates to the field of communication technologies, and in particular, to an information processing method and a related apparatus.

**BACKGROUND**

With development of communication technologies, spectrum resources are quickly occupied and gradually become scarce. To improve utilization of the spectrum resources, a mechanism for co-construction and sharing of the spectrum resources is used, in other words, a plurality of network devices can share a spectrum of a same band. However, although the co-construction and sharing of the spectrum resources between the network devices can improve resource utilization, various types of interference are also brought. For example, the interference may be classified into uplink interference and downlink interference based on signal directions; and based on interference scenarios, the interference may be classified into interference between terrestrial networks, interference between a terrestrial network and a non-terrestrial communication network (non-terrestrial Network, NTN), interference between non-terrestrial networks, and the like. Therefore, how to eliminate the interference is an urgent problem to be resolved.

**SUMMARY**

Embodiments of this application provide an information processing method and a related apparatus, to obtain total uplink interference generated by terminals served by another network device, thereby helping perform corresponding interference coordination based on the total uplink interference.

According to a first aspect, an embodiment of this application provides an information processing method. The method may be applied to a first network device, or a chip or a chip module in a first network device, or a module or a unit that can implement all or some functions of a first network device, or the like. The following uses the first network device as an example for description. In the method, the first network device receives terminal information of at least one second network device, where the terminal information includes a quantity of terminals served by the at least one second network device, and location information and equivalent isotropic radiated power information of the terminals served by the at least one second network device; and determines, based on the terminal information, total uplink interference generated to the first network device by the terminals served by the at least one second network device.

It can be learned that, in the information processing method, the first network device may determine, based on terminal information of one or more second network devices, total uplink interference generated by terminals served by the one or more second network devices, thereby helping perform corresponding interference coordination based on the total uplink interference.

Optionally, there is overlapping between a geographical area, a coverage area, or a visible area served by the first network device and a geographical area, a coverage area, or a visible area served by at least one second network device. The total uplink interference generated to the first network device by the terminals served by the at least one second network device is total uplink interference generated to uplink receiving of the first network device by uplink sending of the terminals served by the at least one second network device.

Optionally, the total uplink interference is total uplink interference, such as total uplink interference power or an interference-to-noise ratio, generated to uplink receiving of the first network device by uplink sending of the terminals served by the at least one second network device. Optionally, terminal information of the second network device, for example, a quantity of terminals served by the second network device, and location information and equivalent isotropic radiated power information of the terminals, is received by the first network device from the second network device.

In an optional implementation, the terminal information further includes frequency domain configuration information of uplink transmission of the at least one second network device, and that the first network device determines, based on the terminal information, the total uplink interference generated to the first network device by the terminals served by the at least one second network device includes: The first network device determines a receive antenna gain based on location information of terminals served by the second network device; determines, based on frequency domain configuration information of uplink transmission of the second network device, equivalent isotropic radiated power information of the terminals served by the second network device, and the receive antenna gain, uplink interference generated to the first network device by the terminals served by the second network device; and further determines, based on uplink interference generated to the first network device separately by the terminals served by the at least one second network device, the total uplink interference generated to the first network device by the terminals served by the at least one second network device.

In an optional implementation, the information transmission method further includes: The first network device determines, based on the total uplink interference generated to the first network device by the terminals served by the at least one second network device, whether to perform interference coordination. It can be learned that, in this implementation, whether interference needs to be eliminated may be determined based on the total uplink interference.

In an optional implementation, if the first network device determines to perform the interference coordination, the method further includes: The first network device determines a first area based on the uplink interference generated to the first network device separately by the terminals served by the at least one second network device, where interference strength of uplink interference generated to the first network device by terminals served by a second network device in the first area is greater than a preset value; and the first network device determines a beam weight of a receive beam, where a main lobe of the receive beam points to an area other than the first area, or a null direction of the receive beam points to the first area. The first area is an area in which the second network device is located, where the interference strength of the uplink interference generated to the first network device by the terminals served by the second network device is greater than the preset value. It can be learned that, in this implementation, uplink interference generated to the first network device by terminals served by at least one network device can be reduced.

In another optional implementation, if it is determined to perform the interference coordination, the method further includes: The first network device configures a band of uplink transmission, where the band of uplink transmission configured by the first network device does not overlap a band of uplink transmission of the at least one second network device. It can be learned that, in this implementation, uplink interference generated to the first network device by terminals served by at least one network device can be eliminated.

In an optional implementation, the first network device is a satellite, and the at least one second network device is a network device within a coverage area or a visible area of the satellite. It can be learned that, in this implementation, the satellite can determine a total uplink interference condition generated to the satellite by terminals served by at least one network device within the coverage area or the visible area of the satellite. Correspondingly, in this implementation, location information of the second network device is used as the location information of the terminals served by the second network device.

In another optional implementation, the first network device is a low earth orbit satellite, and the at least one second network device is a geostationary earth orbit satellite whose served geographical area is within a coverage area or a visible area of the low earth orbit satellite. It can be learned that, in this implementation, the low earth orbit satellite can determine a total uplink interference condition generated to the low earth orbit satellite by terminals served by the geostationary earth orbit satellite whose served geographical area is within the coverage area or the visible area of the low earth orbit satellite. Correspondingly, the location information of the terminals served by the second network device is location information of the geographical area served by the geostationary earth orbit satellite, and the terminals served by the second network device are terminals served by the geostationary earth orbit satellite in the geographical area. Optionally, the location information of the geographical area served by the geostationary earth orbit satellite may be beam position scheduling information of the geostationary earth orbit satellite. Optionally, frequency domain configuration information of uplink transmission configured by the second network device may be frequency domain configuration information associated with the beam position scheduling information.

Optionally, the equivalent isotropic radiated power information includes an average antenna gain of the terminals served by the second network device, and the equivalent isotropic radiated power information further includes average transmit power or statistical information of transmit power of the terminals served by the second network device. In this way, the first network device can determine, based on the equivalent isotropic radiated power information, the uplink interference generated to the first network device by the terminals served by the second network device.

According to a second aspect, an embodiment of this application further provides an information processing method. The method may be applied to a second network device, or a chip in a second network device, or a module or a unit that can implement all or some functions of a second network device, or the like. The following uses the second network device as an example for description. In the method, the second network device sends terminal information, where the terminal information includes a quantity of terminals served by the second network device, and location information and equivalent isotropic radiated power information of the served terminals; and the terminal information is used to determine uplink interference generated to a first network device by the terminals served by the second network device.

It can be learned that, in the information processing method, the second network device may send information about the served terminals to the first network device, so that the first network device can determine uplink interference generated by the terminals served by the second network device, thereby helping perform corresponding interference coordination based on the uplink interference.

Optionally, there is overlapping between a geographical area, a coverage area, or a visible area served by the first network device and a geographical area, a coverage area, or a visible area served by at least one second network device.

Optionally, the uplink interference is uplink interference, such as uplink interference power or an interference-to-noise ratio, generated to uplink receiving of the first network device by uplink sending of the terminals served by the second network device.

In an optional implementation, the terminal information further includes frequency domain configuration information of uplink transmission of the second network device. This helps the first network device determine, based on the frequency domain configuration information, the uplink interference generated to the first network device by the terminals served by the second network device.

In an optional implementation, the first network device is a satellite, and the second network device is a network device within a coverage area or a visible area of the satellite; and location information of the second network device is used as the location information of the terminals served by the second network device.

In another optional implementation, the first network device is a low earth orbit satellite, and the second network device is a geostationary earth orbit satellite whose served geographical area is within a coverage area or a visible area of the low earth orbit satellite; and the location information of the terminals served by the second network device is location information of the geographical area, and the terminals served by the second network device are terminals served by the geostationary earth orbit satellite in the geographical area.

Optionally, before the geostationary earth orbit satellite sends the terminal information, the information transmission method further includes: The geostationary earth orbit satellite receives ephemeris information from the low earth orbit satellite; and determines, based on the ephemeris information, equivalent isotropic radiated power information of the terminals served by the geostationary earth orbit satellite in the geographical area.

Optionally, in the information transmission method, the equivalent isotropic radiated power information sent by the second network device includes an average antenna gain of the terminals served by the second network device, and the equivalent isotropic radiated power information further includes average transmit power or statistical information of transmit power of the terminals served by the second network device.

According to a third aspect, an embodiment of this application further provides a communication apparatus. The communication apparatus is a first network device, or an apparatus of a first network device, or an apparatus that can be used in a matching manner with a first network device. In a possible implementation, the communication apparatus includes a functional module, and the functional module is a hardware circuit, software, or a combination of a hardware circuit and software.

In a possible implementation, the communication apparatus includes one or more functional units, for example, a communication unit and a processing unit. The communication unit is configured to receive terminal information of at least one second network device, where the terminal information includes a quantity of terminals served by the at least one second network device, and location information and equivalent isotropic radiated power information of the served terminals. The processing unit is configured to determine, based on the terminal information, total uplink interference generated to the first network device by the terminals served by the at least one second network device.

It can be learned that, the communication apparatus may determine, based on terminal information of one or more second network devices, total uplink interference generated by terminals served by the one or more second network devices, thereby helping perform corresponding interference coordination based on the total uplink interference.

Optionally, there is overlapping between a geographical area, a coverage area, or a visible area served by the first network device and a geographical area, a coverage area, or a visible area served by at least one second network device.

Optionally, the total uplink interference is total uplink interference, such as total uplink interference power or an interference-to-noise ratio, generated to uplink receiving of the first network device by uplink sending of the terminals served by the at least one second network device. Optionally, terminal information of the second network device, for example, a quantity of terminals served by the second network device, and location information and equivalent isotropic radiated power information of the terminals, is received by the first network device from the second network device.

In an optional implementation, the terminal information further includes frequency domain configuration information of uplink transmission of the at least one second network device, and that the processing unit determines, based on the terminal information, the total uplink interference generated to the first network device by the terminals served by the at least one second network device specifically includes: The processing unit determines a receive antenna gain based on location information of terminals served by the second network device; determines, based on frequency domain configuration information of uplink transmission of the second network device, equivalent isotropic radiated power information of the terminals served by the second network device, and the receive antenna gain, uplink interference generated to the first network device by the terminals served by the second network device; and further determines, based on uplink interference generated to the first network device separately by the terminals served by the at least one second network device, the total uplink interference generated to the first network device by the terminals served by the at least one second network device.

In an optional implementation, the processing unit is further configured to determine, based on the total uplink interference generated to the first network device by the terminals served by the at least one second network device, whether to perform interference coordination. It can be learned that, in this implementation, whether interference needs to be eliminated may be determined based on the total uplink interference.

In an optional implementation, if the communication apparatus determines to perform the interference coordination, the processing unit is further configured to determine a first area based on the uplink interference generated to the first network device separately by the terminals served by the at least one second network device, where interference strength of uplink interference generated to the first network device by terminals served by a second network device in the first area is greater than a preset value; and the processing unit is further configured to determine a beam weight of a receive beam, where a main lobe of the receive beam points to an area other than the first area, or a null direction of the receive beam points to the first area. The first area is an area in which the second network device is located, where the interference strength of the uplink interference generated to the first network device by the terminals served by the second network device is greater than the preset value. It can be learned that, in this implementation, uplink interference generated to the first network device by terminals served by at least one network device can be reduced.

In another optional implementation, if it is determined to perform the interference coordination, the processing unit is further configured to configure a band of uplink transmission, where the band of uplink transmission configured by the communication apparatus does not overlap a band of uplink transmission of the at least one second network device. It can be learned that, in this implementation, uplink interference generated to the first network device by terminals served by at least one network device can be eliminated.

In an optional implementation, the first network device is a satellite, or a chip in a satellite, or a module or a unit that can implement all or some functions of a satellite, and the at least one second network device is a network device within a coverage area or a visible area of the satellite. It can be learned that, in this implementation, the first network device can determine a total uplink interference condition generated to the first network device by terminals served by at least one network device within the coverage area or the visible area of the satellite. Correspondingly, in this implementation, location information of the second network device is used as the location information of the terminals served by the second network device.

In another optional implementation, the first network device is a low earth orbit satellite, or a chip in a low earth orbit satellite, or a module or a unit that can implement all or some functions of a low earth orbit satellite, and the at least one second network device is a geostationary earth orbit satellite whose served geographical area is within a coverage area or a visible area of the low earth orbit satellite. It can be learned that, in this implementation, the low earth orbit satellite can determine a total uplink interference condition generated to the low earth orbit satellite by terminals served by the geostationary earth orbit satellite whose served geographical area is within the coverage area or the visible area of the low earth orbit satellite.

Correspondingly, the location information of the terminals served by the second network device is location information of the geographical area served by the geostationary earth orbit satellite, and the terminals served by the second network device are terminals served by the geostationary earth orbit satellite in the geographical area. Optionally, the location information of the geographical area served by the geostationary earth orbit satellite may be beam position scheduling information of the geostationary earth orbit satellite. Optionally, frequency domain configuration information of uplink transmission configured by the second network device may be frequency domain configuration information associated with the beam position scheduling information.

Optionally, the equivalent isotropic radiated power information includes an average antenna gain of the terminals served by the second network device, and the equivalent isotropic radiated power information further includes average transmit power or statistical information of transmit power of the terminals served by the second network device. In this way, the communication apparatus can determine, based on the equivalent isotropic radiated power information, the uplink interference generated to the first network device by the terminals served by the second network device.

According to a fourth aspect, an embodiment of this application further provides a communication apparatus. The communication apparatus is a second network device, or an apparatus of a second network device, or an apparatus that can be used in a matching manner with a second network device. In a possible implementation, the communication apparatus includes a functional module, and the functional module is a hardware circuit, software, or a combination of a hardware circuit and software.

In a possible implementation, the communication apparatus includes one or more functional units, for example, a communication unit. The communication unit is configured to send terminal information, where the terminal information includes a quantity of terminals served by the second network device, and location information and equivalent isotropic radiated power information of the served terminals; and the terminal information is used to determine uplink interference generated to a first network device by the terminals served by the second network device. Optionally, the communication apparatus includes a processing unit, and the processing unit is configured to determine the terminal information.

It can be learned that the communication apparatus may send, to the first network device, information about the terminals served by the second network device, so that the first network device can determine uplink interference generated to the first network device by the terminals served by the second network device, thereby helping perform corresponding interference coordination based on the uplink interference.

Optionally, there is overlapping between a geographical area, a coverage area, or a visible area served by the second network device and a geographical area, a coverage area, or a visible area served by the first network device.

Optionally, the uplink interference is uplink interference, such as uplink interference power or an interference-to-noise ratio, generated to uplink receiving of the first network device by uplink sending of the terminals served by the second network device.

In an optional implementation, the terminal information further includes frequency domain configuration information of uplink transmission of the second network device. This helps the first network device determine, based on the frequency domain configuration information, the uplink interference generated to the first network device by the terminals served by the second network device.

In an optional implementation, the first network device is a satellite, and the second network device is a network device within a coverage area or a visible area of the satellite; and location information of the second network device is used as the location information of the terminals served by the second network device.

In another optional implementation, the first network device is a low earth orbit satellite, and the second network device is a geostationary earth orbit satellite whose served geographical area is within a coverage area or a visible area of the low earth orbit satellite; and the location information of the terminals served by the second network device is location information of the geographical area, and the terminals served by the second network device are terminals served by the geostationary earth orbit satellite in the geographical area.

Optionally, before sending the terminal information, the communication unit is further configured to receive ephemeris information from the low earth orbit satellite; and the processing unit is further configured to determine, based on the ephemeris information, equivalent isotropic radiated power information of the terminals served by the geostationary earth orbit satellite in the geographical area.

Optionally, the equivalent isotropic radiated power information includes an average antenna gain of the terminals served by the second network device, and the equivalent isotropic radiated power information further includes average transmit power or statistical information of transmit power of the terminals served by the second network device.

In the third aspect and the fourth aspect, in an example, the processing unit may be implemented as a processing unit, or may be implemented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver or the communication interface may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver (or the communication interface) may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. The chip may be referred to as a system on a chip (System on a Chip, SoC). Whether the components are independently disposed on different chips or integrated and disposed on one or more chips usually depends on a requirement of a product design. Embodiments of this application impose no limitation on specific implementations of the foregoing components.

According to a fifth aspect, an embodiment of this application further provides a processor, configured to perform the method in the first aspect or the second aspect, or any possible implementation of the first aspect or the second aspect. In processes of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to a transceiver, so that the transceiver (or a communication interface) transmits the signal. After the foregoing signal is output by the processor, other processing may further need to be performed on the signal before the signal reaches the transceiver (or the communication interface). Similarly, when the processor receives the foregoing input signal, the transceiver (or the communication interface) receives the foregoing signal, and inputs the signal into the processor. Further, after the transceiver (or the communication interface) receives the foregoing signal, other processing may further need to be performed on the foregoing signal, and then the processed signal is input into the processor.

Unless otherwise specified, operations such as sending and receiving related to the processor may be more generally understood as operations such as outputting, receiving, and inputting of the processor if the operations do not conflict with actual functions or internal logic of the operations in related descriptions, instead of operations such as sending and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a sixth aspect, an embodiment of this application further provides a communication apparatus, including: a processor, configured to invoke a computer program stored in a memory, so that the communication apparatus implements the method in the first aspect or the second aspect, or any possible implementation of the first aspect or the second aspect. Optionally, the communication apparatus further includes the memory, and the processor is coupled to the memory.

According to a seventh aspect, this application further provides a communication system. The system includes at least one first network device that performs the method according to any one of the first aspect or the optional implementations of the first aspect in the foregoing aspect, and at least one second network device that performs the method according to any one of the second aspect or the possible implementations of the second aspect. In another possible design, the system may further include another device that interacts with the first network device and/or the second network device in the solution provided in embodiments of this application.

According to an eighth aspect, this application provides a computer-readable storage medium. The computer-readable storage medium stores a computer program. When the computer program is run, the method according to any one of the first aspect or the second aspect or any optional implementation of the first aspect or the second aspect is performed.

According to a ninth aspect, this application further provides a computer program product including instructions. The computer program product includes computer program code. When the computer program code is run, the method according to any one of the first aspect or the second aspect or any optional implementation of the first aspect or the second aspect is performed.

According to a tenth aspect, this application provides a chip system. The chip system includes a processor and an interface. The interface is configured to obtain a program or instructions, and the processor is configured to invoke the program or the instructions to implement the method according to any one of the first aspect or the second aspect or any optional implementation of the first aspect or the second aspect. In a possible design, the chip system further includes a memory. The memory is configured to store program instructions and data that are necessary for a terminal. The chip system may include a chip, or may include a chip and another discrete component.

**BRIEF DESCRIPTION OF DRAWINGS**

FIG. 1 is a diagram of an NTN scenario based on a transparent payload;
FIG. 2 is a diagram of an NTN scenario based on a regenerative payload;
FIG. 3 is a diagram of a structure of a communication system;
FIG. 4 is a diagram of interference from a low earth orbit satellite to a terrestrial terminal;
FIG. 5 is another diagram of interference from a terrestrial terminal to a low earth orbit satellite;
FIG. 6 is a diagram of a satellite-terrestrial interference scenario;
FIG. 7 is a diagram of an interference scenario between a low earth orbit satellite and a high earth orbit satellite;
FIG. 8 is a schematic flowchart of an information processing method according to an embodiment of this application;
FIG. 9 is a diagram in which a band of uplink transmission of a first network device does not overlap a band of uplink transmission of a second network device according to an embodiment of this application;
FIG. 10 is a diagram of another information processing method according to an embodiment of this application;
FIG. 11 shows a correspondence between a worst-month percentage and I/N (dB) according to an embodiment of this application;
FIG. 12 shows a CDF curve of an interference threshold I/N according to an embodiment of this application;
FIG. 13 is a diagram of a beam weight according to an embodiment of this application;
FIG. 14 is a diagram of another information processing method according to an embodiment of this application;
FIG. 15 is another diagram of a beam weight according to an embodiment of this application;
FIG. 16 is a diagram of a structure of a communication apparatus according to this application; and
FIG. 17 is a diagram of a structure of another communication apparatus according to an embodiment of this application.

**DESCRIPTION OF EMBODIMENTS**

Embodiments of this application provide an information processing method and a related apparatus. In the method, a first network device receives terminal information of at least one second network device, where the terminal information includes a quantity of terminals served by the at least one second network device, and location information and equivalent isotropic radiated power information of the terminals served by the at least one second network device; and the first network device determines, based on the terminal information, total uplink interference generated to the first network device by the terminals served by the at least one second network device. This helps the first network device perform corresponding interference coordination based on the total uplink interference.

Optionally, embodiments of this application may be applied to various communication systems using a radio access technology (radio access technology, RAT), for example, a narrowband internet of things (narrowband internet of things, NB-IoT) system, a long term evolution (long term evolution, LTE) communication system, a 5G (or referred to as new radio (new radio, NR)) communication system, or a transition system between the LTE communication system and the 5G communication system, where the transition system may also be referred to as a 4.5G communication system. Certainly, the communication system may be a future communication system, for example, a 6th generation (6th generation, 6G) system or even a 7th generation (7th generation, 7G) system. Embodiments of this application may be further applied to a non-terrestrial network (non-terrestrial network, NTN), vehicle to everything (vehicle to everything, V2X), long term evolution-vehicle (long term evolution-vehicle, LTE-V), vehicle to vehicle (vehicle to vehicle, V2V), machine type communication (machine type communication, MTC), internet of things (internet of things, IoT), long term evolution-machine to machine (LTE-machine to machine, LTE-M), machine to machine (machine to machine, M2M), or a future mobile communication system.

Optionally, an NTN system may include a satellite system. Based on a satellite altitude, namely, a satellite orbit altitude, the satellite system is classified into a highly elliptical orbit

(highly elliptical orbit, HEO) satellite, a geosynchronous orbit (geosynchronous orbit, GEO) satellite, a medium earth orbit (medium earth orbit, MEO) satellite, and a low earth orbit (low earth orbit, LEO) satellite. In addition, the NTN system may further include a high altitude platform station (high altitude platform station, HAPS) communication system. Compared with communication infrastructure such as terrestrial cellular networks and submarine optical fibers, the NTN has a significant cost advantage. Development and manufacturing costs of modern small satellites are low, and software-defined technologies can further prolong the service life of in-orbit satellites. A large number of satellites are deployed in a low earth orbit, and a round-trip transmission latency between a satellite and a terrestrial terminal is greatly reduced to a low latency in the tens of milliseconds. The use of technologies such as high bands, multi-point beams, and frequency multiplexing significantly improves the communication capability of the satellites, reduces the unit broadband cost, and meets the requirements of high information rate services. The NTN network can be used in scenarios such as global coverage (such as remote areas and ocean-going ships), emergency relief (such as disaster monitoring and emergency communication), internet of everything, and high-speed mobility (such as high-speed railways and airplanes).

Optionally, a network device is an access network (access network, AN) device, for example, a base station, that is connected to a mobile communication system by a terminal in a wireless manner. The network device may alternatively be a device that communicates with a terminal device through an air interface. The network device may include an evolved NodeB (evolved NodeB, eNodeB, or eNB) transmission reception point (transmission reception point, TRP) in a long term evolution (long term evolution, LTE) system or a long term evolution-advanced (long term evolution-advanced, LTE-A) system, a next generation NodeB (next generation NodeB, gNB) in a 5th generation (5th generation, 5G) mobile communication system, an access network device in an open radio access network (open radio access network, O-RAN, or open RAN), a next generation base station in a 6th generation (6th generation, 6G) mobile communication system, a base station in a future mobile communication system, an access node in a wireless fidelity (wireless fidelity, Wi-Fi) system, or the like. Alternatively, the network device may be a relay station, a vehicle-mounted device, a future evolved public land mobile network (public land mobile network, PLMN) device, a device in a device-to-device (device-to-device, D2D) network, a device in an M2M network, a device in an IoT network, a network device in a public land mobile network (public land mobile network, PLMN), or the like.

Optionally, for example, the network device is the base station. The base station may communicate with the terminal device, or may communicate with the terminal device through a relay station. The terminal may communicate with a plurality of base stations in different access technologies. The network device may be a module or a unit that completes some functions of the base station, for example, may be a central unit (central unit, CU), a distributed unit (distributed unit, DU), a central unit control plane (CU control plane, CU-CP) module, or a central unit user plane (CU user plane, CU-UP) module. A plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that such protocol layer division is merely an example, and division may alternatively be performed at another protocol layer. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are respectively a control-plane CU entity (CU-CP entity) and a user-plane CU entity (CU-UP entity). In this network architecture, signaling generated by the CU may be sent to the terminal device through the DU, or signaling generated by the terminal device may be sent to the CU through the DU. The DU may transparently transmit the signaling to the terminal device or the CU by directly encapsulating the signaling at a protocol layer without parsing the signaling. In this network architecture, the CU is classified as a network device on a radio access network (radio access network, RAN) side. In addition, the CU may alternatively be classified as a network device on a core network (core network, CN) side. This is not limited in this application. Optionally, the access network device may be a server or the like. For example, the network device in the vehicle V2X technology may be a road side unit (road side unit, RSU). Optionally, the network device may alternatively be various devices that constitute an access node, for example, an active antenna unit (active antenna unit, AAU) or a baseband unit (baseband unit, BBU).

Optionally, the network device is the network device in the NTN system, and may be deployed on the high altitude platform station or the satellite, for example, a satellite or a satellite base station. Scenarios in which the NTN system provides access for terminals may include a transparent payload (transparent payload) and a regenerative payload (regenerative payload). The transparent payload is a payload that changes a frequency carrier of an uplink radio frequency signal and filters and amplifies the uplink radio frequency signal before downlink transmission. This payload has only a radio frequency processing unit and does not have processing such as baseband demodulation or decoding. Therefore, a signal waveform is unchanged and is repeated. The regenerative payload is a payload that transforms and amplifies an uplink radio frequency signal before the uplink radio frequency signal is transmitted in a downlink. Signal transformation means digital processing, which may include demodulation, decoding, re-encoding, re-modulation, and/or filtering. This is equivalent to that a satellite (or an unmanned aircraft system platform (unmanned aircraft system platform, UAS platform)) has all or some functions of a base station (for example, a gNB).

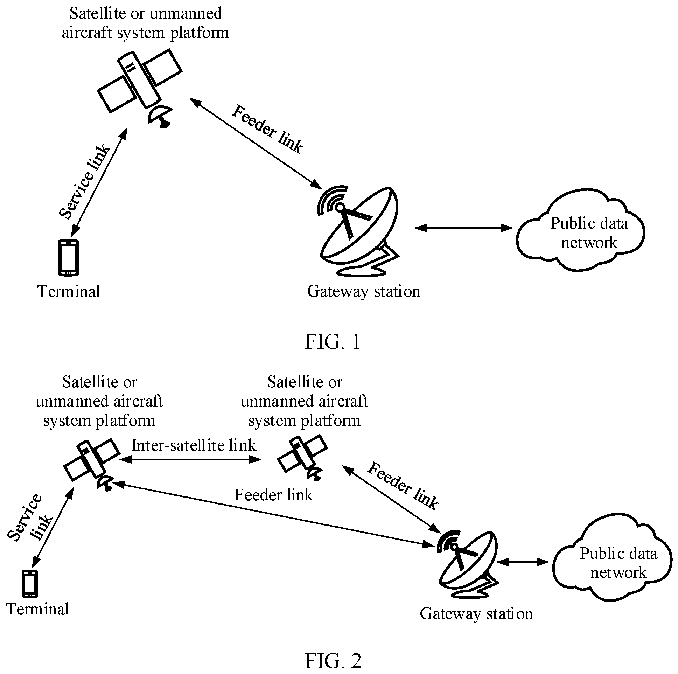

FIG. 1 is a diagram of an NTN scenario based on a transparent payload. As shown in FIG. 1, there is one or more gateway (Gateway) stations connected to an NTN network and a public data network (Data network). A feeder link (feeder link) is a radio link between the gateway station and a satellite (or a UAS platform). A service link is a radio link between a terminal and the satellite (or UAS platform). The satellite (or UAS platform) can implement a transparent payload.

FIG. 2 is a diagram of an NTN scenario based on a regenerative payload. As shown in FIG. 2, the NTN scenario also includes a feeder link and a service link. Whether there is an inter-satellite link (inter-satellite link, ISL) between satellites shown in FIG. 2 is optional. If there is no ISL, the satellite needs to have a feeder link (mandatory if no ISL). The inter-satellite link requires that the satellite is the regenerative payload (that is, if there is the inter-satellite link, the satellite is the regenerative payload). The ISL may operate in a radio frequency or an optical band. User equipment (user equipment) is served by a satellite (or UAS platform) in a target service area. The target service area is a geographical area in which the satellite can provide a service.

Satellite communication operates in a microwave band, and a frequency range of satellite communication is 1 GHz to 40 GHz. Table 1 shows a satellite spectrum and a main usage of the satellite spectrum. The frequency range may be divided into L, S, C, X, Ku, K, and Ka based on a band. Different bands correspond to different usages. The K band corresponds to a frequency range of 18 GHz to 27 GHz. Because the K band is located in a frequency window that is most affected by an atmospheric absorption loss, the K band is not suitable for satellite communication. Therefore, commonly used satellite communication bands are L, S, C, X, Ku, and Ka. The L and S bands are used for satellite mobile communication. The C band has a lower frequency and large signal coverage, is less affected by weather, is often used for fixed satellite service communication and the like, and is nearly saturated. The X band is a regulated band and is mainly used for fixed satellite service communication. The Ku band has a higher frequency and is easily affected by antennas, causing signal fluctuation. However, signal strength of the Ku band is higher than that of the C band. Therefore, an aperture of a terrestrial receive antenna is much smaller, usually with a diameter as small as 0.35 meters. The Ku band is suitable for direct-to-home satellite television broadcasting. The Ka band emerges and is put into use in recent years. Because the C and Ku bands are nearly saturated and cannot carry more services, the Ka band with a higher frequency starts to be used. A higher band indicates more bandwidth resources and a larger service capacity that can be supported. With vigorous development of satellite communication, bands such as Ku, Ka, Q, and V have become hotspots for satellite communication applications. As a result, spectrum resources will be quickly occupied and gradually become scarce. A frequency range of the Q band is 30 GHz to 50 GHz, and a frequency range of the V band is 50 GHz to 75 GHz.

Table 1 Satellite spectrum and main usage

| Band | Range | Usage |
| --- | --- | --- |
| L | 1 GHz to 2 GHz (GHz) | Mainly used for applications such as satellite mobile communication, satellite radio determination, and a satellite measurement and control link |
| S | 2 GHz to 4 GHz | |
| C | 4 GHz to 7 GHz | Mainly used for fixed satellite service communication, and nearly saturated |

(continued)

| Band | Range | Usage |
|---|---|---|
| X | 7 GHz to 12 GHz | Mainly used for fixed satellite service communication |
| Ku | 12 GHz to 18 GHz | Mainly used for fixed satellite service communication, and nearly saturated |
| Ka | 27 GHz to 40 GHz | Being applied for in a large number for use |

For a frequency range (frequency range, FR) 1, frequency ranges and band numbers of the NTN are shown in Table 2. $F_{ULlow}$-$F_{ULhigh}$ represents a frequency range of an uplink, $F_{ULlow}$ represents a low frequency of the uplink, and $F_{ULhigh}$ represents a high frequency of the uplink. $F_{DLlow}$-$F_{DLhigh}$ represents a frequency range of a downlink, $F_{DLlow}$ represents a low frequency of the downlink, and $F_{DLhigh}$ represents a high frequency of the downlink.

Table 2 Band (FR 1) of the NTN

| Satellite operating band | Uplink operating band $F_{UL, low}$-$F_{UL, high}$ | Downlink operating band $F_{DL, low}$-$F_{DL, high}$ | Duplex mode |
|---|---|---|---|
| n256 | 1980 MHz to 2010 MHz | 2170 MHz to 2200 MHz | FDD |
| n255 | 1626.5 MHz to 1660.5 MHz | 1525 MHz to 1559 MHz | FDD |
| Note: Satellite bands are numbered in descending order from n256. | | | |

For bands higher than 10 GHz, frequency ranges and band numbers of the NTN are shown in Table 3.

Table 3 NTN band (FR 2)

| NTN operating band | Uplink: Earth-to-Space | Downlink: Space-to-Earth |
|---|---|---|
| n512 | 27.5 GHz to 30.0 GHz | 17.3 GHz to 20.2 GHz |
| n511 | 28.35 GHz to 30.0 GHz | 17.3 GHz to 20.2 GHz |
| n510 | 27.5 GHz to 28.35 GHz | 17.3 GHz to 20.2 GHz |

Optionally, the network device may be a macro base station (also referred to as a large station), or a micro base station or an indoor station (also referred to as a small station), or may be a relay node, a donor node, or the like. A specific technology and a specific device form that are used by the access network device are not limited in this application. Optionally, a communication apparatus configured to implement a function of the network device may be a network device, or may be an apparatus, for example, a chip system, that can support the network device in implementing the function. The apparatus may be installed in the network device.

Optionally, the terminal, also referred to as a terminal (terminal) device, user equipment (user equipment, UE), a mobile station (mobile station, MS), a mobile terminal (mobile terminal, MT), or the like, is a device having a wireless transceiver function, and may send a signal to the network device or receive a signal from the network device. The terminal device may include user equipment (user equipment, UE), and is sometimes referred to as a terminal, an access station, a UE station, a remote station, a wireless communication device, a user apparatus, or the like. The terminal device is configured to connect to a person, an object, a machine, and the like, and may be widely used in various scenarios, for example, including but not limited to the following scenarios: cellular communication, D2D, V2X, M2M/MTC, IoT, virtual reality (virtual reality, VR), augmented reality (augmented reality, AR), industrial control (industrial control), self-driving (self-driving), telemedicine (remote medical), a smart grid (smart grid), smart furniture, smart office, a smart wearable, smart transportation, a smart city (smart city), an uncrewed aerial vehicle, and a robot. For example, the terminal may be a mobile phone (mobile phone), a tablet computer (Pad), a computer having a wireless transceiver function, a VR terminal, an AR terminal, a wireless terminal in industrial control, a wireless terminal in self-driving, a smart speaker in an IoT network, a wireless terminal device in telemedicine, a wireless terminal device in a smart grid, a wireless terminal device in transportation safety, a wireless terminal device in a smart city, a wireless terminal device in a smart home, or the like. By way of example, and not limitation, the terminal may alternatively be a wearable device. The wearable device may also be referred to as a wearable smart device, a smart wearable device, or the like, and is a general term of wearable devices, such as glasses, gloves, watches, clothes, and shoes, that are developed by applying wearable technologies to intelligent designs of daily wear. However, if the various terminals described above are located on a vehicle (for example, placed in the vehicle or installed in the vehicle), the terminals may be considered as vehicle-mounted terminal devices. For example, the vehicle-mounted terminal device is also referred to as an on-board unit (on-board unit, OBU). The terminal may alternatively be a vehicle-mounted module, a vehicle-mounted assembly, a vehicle-mounted component, a vehicle-mounted chip, a vehicle-mounted unit, or the like that is mounted in the vehicle as one or more components or units. The vehicle may implement the method according to embodiments of this application through the vehicle-mounted module, the vehicle-mounted assembly, the vehicle-mounted component, the vehicle-mounted chip, the vehicle-mounted, or the like that is built-in.

The network device and/or the terminal device may be at fixed positions, or may be movable. The network device and/or the terminal device may be deployed terrestrially, including indoors or outdoors, or may be handheld or vehicle-mounted, may be deployed on a water surface, or may be deployed on an airplane, a balloon, and an artificial satellite in the air. An environment/scenario in which the network device and the terminal device are located is not limited in this application. The network device and the terminal device may be deployed in a same environment/scenario or different environments/scenarios. For example, the network device and the terminal device are both deployed terrestrially. Alternatively, the network device is deployed terrestrially, and the terminal device is deployed on the water surface. Examples are not enumerated.

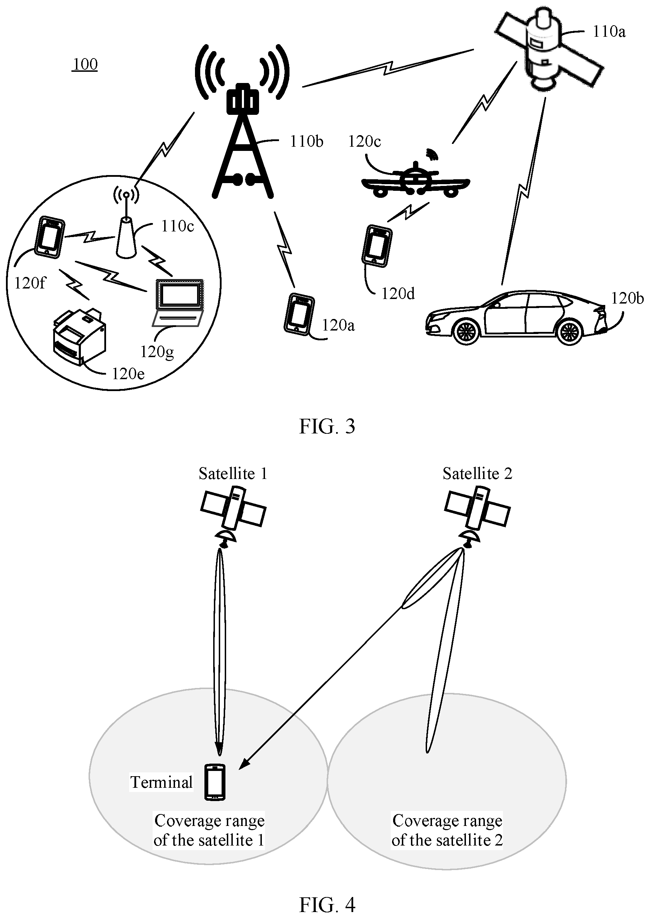

The information transmission method according to this application may be applied to a communication system shown in FIG. 3. A quantity of network devices and a quantity of terminals shown in FIG. 3 are used as an example. However, the quantity of network devices and the quantity of terminals are not limited in this application. In FIG. 3, the network devices are respectively a satellite 110a, a macro base station 110b, and a micro base station or an indoor station 110c. The terminals are respectively a mobile phone 120a that accesses a network through the macro base station 110b, a vehicle 120b that accesses a network through the satellite 110a, an airplane 120c that accesses a network through the satellite 110a, a mobile phone 120d that accesses a network through the satellite 110a, and a printer 120e, a mobile phone 120f, and a computer 120g that access a network through the micro base station or the indoor station 110c. Optionally, the mobile phone 120d may communicate with the satellite 110a by using the airplane 120c as a relay. The mobile phone 120f may communicate with the micro base station or the indoor station 110c by using the computer 120g as a relay.

Interference between different network devices may be classified into downlink interference and uplink interference based on signal directions. The downlink interference has features such as a small quantity of interference sources and strong interference. An interference source of interfering with the mobile phone 120a is the satellite 110a. If the satellite 110a covers the mobile phone 120a, and other satellites do not cover the mobile phone 120a, interference from the other satellites to the mobile phone 120a mainly comes from side lobes of a transmit beam, resulting in a large path loss and a low interference level. Therefore, a main interference source of the mobile phone 120a is the satellite 110a. Because a low earth orbit satellite is close to a terrestrial terminal, if the satellite 110a is a low earth orbit satellite, interference strength of the satellite 110a to the mobile phone 120a is also strong. For example, FIG. 4 is a diagram of interference from a low earth orbit satellite to a terrestrial terminal. The terrestrial terminal is a terminal that performs communication through a terrestrial network. As shown in FIG. 4, the terminal is a terrestrial terminal. Interference sources of the terminal 1 include a satellite 1 and a satellite 2. Both the satellite 1 and the satellite 2 are low earth orbit satellites. The satellite 1 covers the terminal 1. Interference from the satellite 2 to the terminal 1 mainly comes from side lobes of a transmit beam, resulting in a large path loss and a low interference level. Therefore, the satellite 1 is a main interference source of the terminal 1.

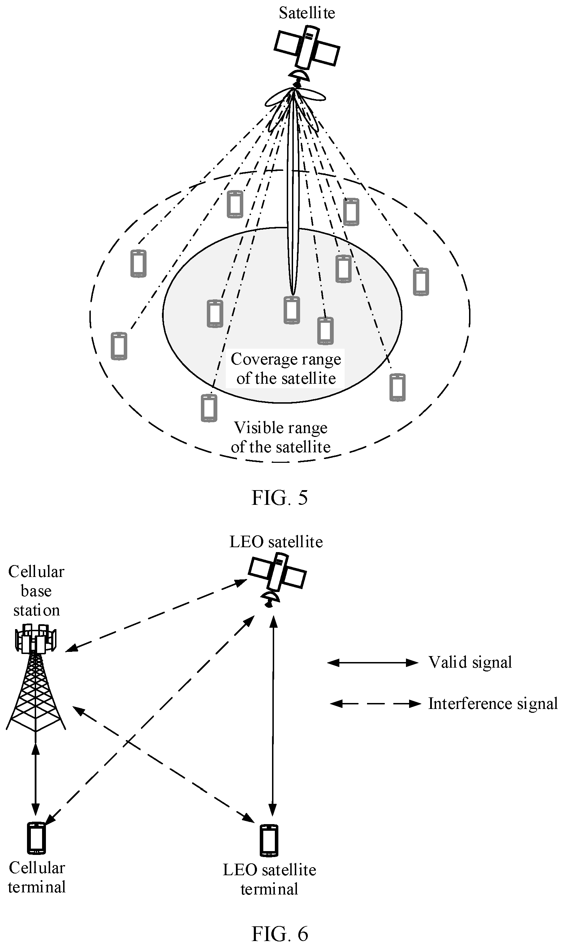

The uplink interference has features such as a large quantity of interference sources, strong aggregate interference, and beam-level feature interference. Interference sources of the satellite 110a may be all terrestrial terminals within a coverage area or a visible area of the satellite 110a, and in particular, terrestrial terminals near a main lobe of the low earth orbit satellite are main interference sources. These terrestrial terminals have strong aggregate interference to the low earth orbit satellite. In a scenario in which a low earth orbit satellite uses a plurality of beams, interference to the low earth orbit satellite has a beam-level feature, in other words, interference in different beam directions is different. For example, FIG. 5 is another diagram of interference from a terrestrial terminal to a low earth orbit satellite. Interference sources of the low earth orbit satellite may be all terrestrial terminals, other than terminals served by the low earth orbit satellite, in a coverage area or a visible area of the low earth orbit satellite. As shown in FIG. 5, a dotted line represents an interference signal from the terrestrial terminal to the satellite, and all terrestrial terminals in the coverage area or the visible area of the satellite interfere with the satellite. As shown in FIG. 5, the coverage area of the satellite is a geographical area in which the satellite can provide a service, the visible area of the satellite is a geographical area within a tangent range between the satellite and the surface of the earth, and the visible area of the satellite is generally greater than the coverage area of the satellite.

Interference between different network devices may be classified into satellite-terrestrial interference (for example, interference between the satellite 110a and the base station 110b in FIG. 3) and high and low earth orbit interference (for example, interference between the satellite 110a and a high earth orbit satellite in FIG. 3 if the satellite 110a is a low earth orbit satellite) based on an interference scenario. In satellite-terrestrial interference, there are large quantities of base stations and terminals in a terrestrial cellular network, an LEO satellite is close to the ground, and a path loss is smaller. Therefore, interference is likely to occur between the LEO satellite and the terrestrial cellular network. For example, FIG. 6 is a diagram of a satellite-terrestrial interference scenario. As shown in FIG. 6, a solid line segment represents a valid signal, a dashed line segment represents an interference signal, and an arrow represents a signal direction. Table 4 shows a classification of satellite-terrestrial interference shown in FIG. 6. A cellular base station and a cellular terminal are interfered with by an LEO satellite due to satellite power leakage of the LEO satellite. In addition, the cellular base station is further interfered with by an LEO satellite terminal due to power leakage of the LEO satellite terminal. Because the LEO satellite is close to the ground, the LEO satellite is interfered with by the cellular base station and the cellular terminal due to power leakage. The LEO satellite terminal is further interfered with by the cellular base station due to power leakage of the cellular base station.

Table 4 Classification of satellite-terrestrial interference

| Interfered party | Interfering party | Interference source |
|---|---|---|
| Cellular base station | LEO satellite | Satellite power leakage (antenna tilt of the base station) |
| | LEO satellite terminal | Terminal power leakage |
| Cellular terminal | LEO satellite | Satellite power leakage |
| LEO satellite | Cellular base station | Base station power leakage (antenna tilt of the base station) |
| | Cellular terminal | Terminal power leakage |
| LEO satellite terminal | Cellular base station | Base station power leakage |

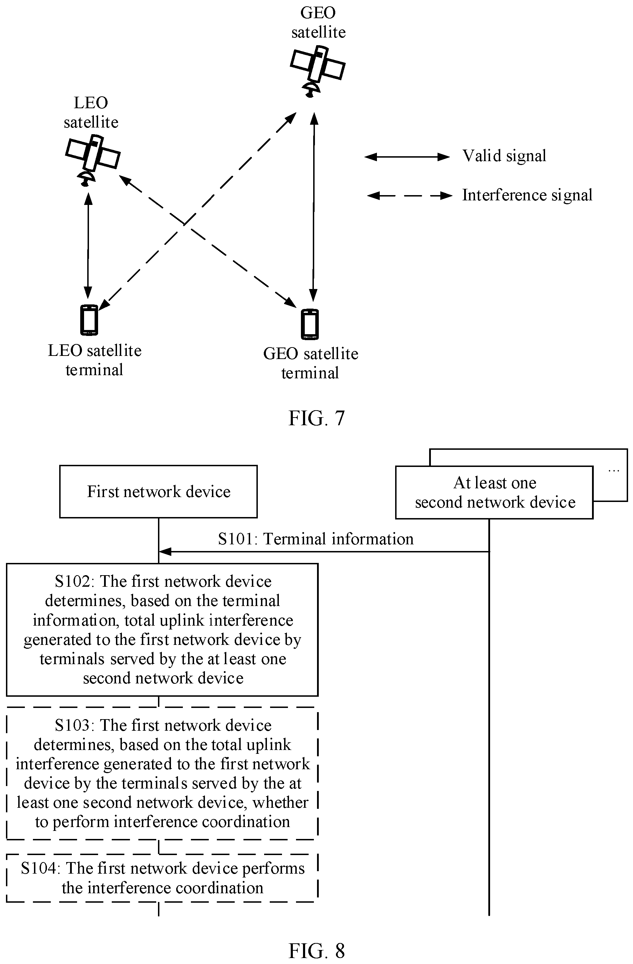

In high and low earth orbit interference, a coverage area of a high earth orbit satellite is large, and there is overlapping between a coverage area of a low earth orbit satellite and a coverage area of the high earth orbit satellite. Because a path loss of the low earth orbit satellite is smaller, interference is likely to occur between the high earth orbit satellite and the low earth orbit satellite. For example, FIG. 7 is a diagram of an interference scenario between a low earth orbit satellite and a high earth orbit satellite. As shown in FIG. 7, a solid line segment represents a valid signal, a dashed line segment represents an interference signal, and an arrow represents a signal direction. Table 5 shows a classification of high and low earth orbit interference shown in FIG. 7. An LEO satellite is interfered with by a GEO satellite terminal due to power leakage, a GEO satellite is interfered with by an LEO satellite terminal due to power leakage, the LEO satellite terminal is interfered with by the GEO satellite due to power leakage, and the GEO satellite terminal is interfered with by the LEO satellite due to power leakage.

Table 5 Classification of high and low earth orbit interference

| Interfered party | Interfering party | Interference source |
|---|---|---|
| LEO satellite | GEO satellite terminal | Terminal power leakage |
| GEO satellite | LEO satellite terminal | Terminal power leakage |
| LEO satellite terminal | GEO satellite | Satellite power leakage |
| GEO satellite terminal | LEO satellite | Satellite power leakage |

According to the information processing method provided in embodiments of this application, total uplink interference generated to uplink receiving of another network device by uplink sending of terminals served by one or more network devices in the foregoing interference scenarios may be analyzed. This helps evaluate an uplink interference condition based on the total uplink interference, and reduce uplink interference through interference coordination, so that the network devices can coexist on the same frequency, and spectrum utilization is improved. The following describes embodiments of this application with reference to the accompanying drawings.

FIG. 8 is a schematic flowchart of an information processing method according to an embodiment of this application. The information processing method shown in FIG. 8 is described by using interaction between a first network device and at least one second network device as an example. As shown in FIG. 8, the information processing method may include but is not limited to the following steps.

S101: The at least one second network device sends terminal information, and correspondingly, the first network device receives the terminal information, where the terminal information sent by the second network device or from the second network device includes a quantity of terminals served by the second network device, location information of the served terminals, and EIRP information.

In an optional implementation, the terminal information includes a quantity of terminals served by the at least one second network device, location information of the served terminals, and the equivalent isotropic radiated power (equivalent isotropic radiated power, EIRP) information. Optionally, a plurality of second network devices send terminal

**EP 4 765 687 A1**

information to one of the second network devices, and the second network device forwards the terminal information of the plurality of second network devices to the first network device.

In another optional implementation, the terminal information includes the quantity of the terminals served by the second network device, the location information of the served terminals, and the EIRP information. Optionally, the plurality of second network devices may separately send respective terminal information to the first network device.

Optionally, if the first network device is a movable network device, for example, a satellite, the first network device further needs to send its own location information to the at least one second network device. In this way, the second network device may determine, based on the location information, EIRP information of the terminals served by the second network device. The location information may include parameters such as a longitude, a latitude, an altitude, and a speed, or may include a movement trajectory parameter, for example, an orbit parameter. The EIRP information may include an average antenna gain of users served by the second network device, and further include average transmit power or statistical information of transmit power of the terminals served by the second network device. Optionally, the statistical information of the transmit power of the terminals served by the second network device may be a cumulative distribution function (cumulative distribution function, CDF) curve of the transmit power. Because of uplink power control, transmit power of terminals dynamically changes, and a CDF curve of the transmit power is statistics of transmit power of the terminals in a period of time.

Optionally, the quantity of the terminals served by the second network device and the EIRP information of the served terminals may also be referred to as connection terminal information of the second network device. Location information or a served geographical area of the second network device may be equivalent to the location information of the terminals served by the second network device.

Optionally, one or more second network devices may send terminal information in a periodic manner or in an event-triggered manner.

S102: The first network device determines, based on the terminal information, total uplink interference generated to the first network device by the terminals served by the at least one second network device.

In an optional implementation, the terminal information further includes frequency domain configuration information of uplink transmission of the at least one second network device. Frequency domain configuration information of uplink transmission of the second network device is frequency domain configuration information used by the second network device to schedule, in an uplink manner, the terminals served by the second network device to perform uplink transmission, and may also be referred to as frequency domain configuration information or frequency domain resource information of uplink scheduling of the second network device. Optionally, the frequency domain configuration information of uplink transmission or uplink scheduling may include a frequency range or bandwidth occupied by uplink transmission or uplink scheduling. Correspondingly, step S102 may include: The first network device determines a receive antenna gain based on the location information of the terminals served by the second network device; and determines, based on EIRP information of the terminals served by the second network device, the receive antenna gain, and the frequency domain configuration information of uplink transmission of the second network device, uplink interference generated to the first network device by the terminals served by the second network device. Correspondingly, the first network device may determine, in this manner, uplink interference generated to the first network device by terminals served by another second network device.

In step S102, the first network device determines total uplink interference generated to the first network device by terminals served by one second network device, where the total uplink interference is uplink interference generated to the first network device by the terminals served by the one second network device. In step S102, the first network device determines total uplink interference generated to the first network device by terminals served by a plurality of second network devices, where the total uplink interference is obtained by summing up the uplink interference generated to the first network device by the terminals served by the plurality of second network devices.

In an optional implementation, the uplink interference generated to the first network device by the terminals served by the second network device is an interference-to-noise ratio (interference-to-noise ratio, INR) generated to the first network device by the terminals served by the second network device. In this way, that the first network device determines, based on the EIRP information of the terminals served by the second network device, the receive antenna gain G, and the frequency domain configuration information of uplink transmission of the second network device, the INR generated to the first network device by the terminals served by the second network device includes: The first network device determines EIRP based on the EIRP information of the users served by the second network device; determines a ratio G/T of the receive antenna gain G to a noise temperature T based on the location information of the terminals served by the second network device and the receive antenna gain G; determines a free-space path loss $PL_{FS}$ based on the location information of the terminals served by the second network device; determines another path loss $PL_{other}$, for example, an atmospheric loss, a scintillation loss, a human body loss, a polarization loss, a shadow fading, and rain attenuation, based on a loss model; and determines a bandwidth B based on the frequency domain configuration information of uplink transmission of the second network device. Further, the first network device determines, based on the EIRP, the ratio G/T of the receive antenna gain G to the noise temperature T, the free-space path loss $PL_{FS}$, the another loss

13

$PL_{other}$, and the bandwidth B, the INR generated to the first network device by the terminals served by the second network device.

Optionally, the first network device may determine, based on the EIRP, the ratio G/T, $PL_{FS}$, $PL_{other}$, and B, the INR generated to the first network device by the terminals served by the second network device, and may obtain the INR by using the following formula:

$$INR[dB] = EIRP[dBW] + G/T\,[dB/K] - k[dBW/K/Hz] - PL_{FS}[dB] - PL_{other}[dB] - B[dBHz] \quad (1)$$

Herein, $k$ is a Boltzmann constant, for example, $k$ is -228.6. [$dB$] represents a unit decibel. [$dBW$] represents a unit of an absolute value of power, and by using 1 watt $W$ as the reference, $dBW$ = 10lg ($P/1W$). P represents power. K is a unit of noise temperature, namely, Kelvin (kelvin, K). [$dBHz$] represents that a unit of the bandwidth B is decibel hertz (Hz).

Correspondingly, the total uplink interference generated to the first network device by the terminals served by the at least one second network device is a ratio I/N of uplink aggregate interference I to noise N, and is obtained by summing up INRs generated to the first network device by the terminals served by the at least one second network device.

In an optional implementation, the first network device collects statistics on a plurality of I/Ns determined in a statistical period, to obtain a CDF curve of the total uplink interference I/N. The first network device may determine, based on the CDF curve of the total uplink interference I/N, a total uplink interference condition generated to the first network device by the terminals served by the at least one second network device. A period in which the second network device sends the terminal information is less than the statistical period in which the first network device determines the I/N. The CDF curve of the total uplink interference I/N may represent percentages of different I/Ns in the statistical period. For example, an I/N corresponding to 20% of the time in the statistical period is not greater than -X1 [dB], an I/N corresponding to 0.03% of the time in the statistical period is not greater than -X2 [dB], an I/N corresponding to 0.005% of the time in the statistical period is not greater than -X3 [dB], and an I/N corresponding to 100% of the time in the statistical period is not greater than -X3 [dB]. X1 to X3 are positive numbers.

Optionally, in addition to representing percentages of different I/Ns in the statistical period, the CDF curve of the total uplink interference I/N may further represent that for a specific proportion of the time in the statistical period, a corresponding I/N is not greater than a specific value [dB], and a bit error rate (bit error rate, BER) does not exceed a specific proportion. For example, for more than 20% of the time in the statistical period, a BER does not exceed a first proportion, and a corresponding I/N is not greater than -X1 [dB]; for 0.03% of the time in the statistical period, a BER does not exceed a second proportion, and a corresponding I/N is not greater than -X2 [dB]; for 0.005% of the time in the statistical period, a BER does not exceed a third proportion, and a corresponding I/N is not greater than -X3 [dB]; and for 100% of the time in the statistical period, a BER does not exceed the third proportion, and a corresponding I/N is not greater than -X3 [dB]. X1 to X3 are greater than or equal to 0.

In another optional implementation, the uplink interference generated to the first network device by the terminals served by the second network device is interference power generated to the first network device by the terminals served by the second network device. Correspondingly, the total uplink interference is a sum of interference power generated to the first network device by the terminals served by the at least one second network device.

In an optional implementation, after step S102, the information transmission method shown in FIG. 8 further includes the following step.

S103: The first network device determines, based on the total uplink interference generated to the first network device by the terminals served by the at least one second network device, whether to perform interference coordination.

In an optional implementation, for example, the total uplink interference is an I/N. Step S103 includes: if an I/N calculated by the first network device is greater than an interference threshold, determining to perform interference coordination; or if an I/N calculated by the first network device is less than or equal to an interference threshold, determining not to perform interference coordination. Optionally, the interference threshold is an interference threshold of a communication system in which the first network device is located, and is provided by the international telecommunication union (international telecommunication union, ITU). The interference threshold may also be referred to as an interference protection threshold, a protection threshold, or the like.

In another optional implementation, for example, the total uplink interference is an I/N. Step S103 includes: The first network device determines, based on the CDF curve of the total uplink interference I/N, whether to perform interference coordination. Optionally, the interference threshold provided by the ITU is represented by a CDF curve, and is referred to as a CDF curve of an interference threshold I/N. The first network device determines, based on the CDF curve of the total uplink interference I/N and the CDF curve of the interference threshold I/N, whether to perform interference coordination.

The CDF curve of the interference threshold I/N represents a corresponding interference threshold I/N when a bit error rate BER does not exceed a specific proportion for more than a specific proportion of time in the statistical period. For example, but not limited to, for more than a first proportion of the time in the statistical period, a BER does not exceed a first value, and a corresponding interference threshold I/N is -T1 [dB]; for more than a second proportion of the time in the statistical period, a BER does not exceed a second value, and a corresponding interference threshold I/N is -T2 [dB]; and for more than a third proportion of the time in the statistical period, a BER does not exceed a third value, and a corresponding interference threshold I/N is -T3 [dB]. T1 to T3 are greater than or equal to 0. For example, corresponding total uplink interference I/N when the BER does not exceed the first value for more than the first proportion of the time on the CDF curve of the total uplink interference I/N is less than or equal to the corresponding interference threshold I/N when the BER does not exceed the first value for more than the first proportion of the time on the CDF curve of the interference threshold I/N. The corresponding total uplink interference I/N when the BER does not exceed the first value for more than the first proportion of the time on the CDF curve of the total uplink interference I/N is less than or equal to -T1 [dB]. Corresponding total uplink interference I/N when the BER does not exceed the second value for more than the second proportion of the time on the CDF curve of the total uplink interference I/N is less than or equal to -T2 [dB]. Corresponding total uplink interference I/N when the BER does not exceed the third value for more than the third proportion of the time on the CDF curve of the total uplink interference I/N is less than or equal to -T3 [dB].

In an optional implementation, for example, the total uplink interference is a sum of interference power generated to the first network device by the terminals served by the at least one second network device. Step S103 includes: if a sum of interference power calculated by the first network device is greater than an interference threshold, determining to perform interference coordination; or if a sum of interference power calculated by the first network device is less than or equal to an interference threshold, determining not to perform interference coordination. Optionally, the interference threshold is provided by the ITU, or is determined by the first network device, or is predefined.

In an optional implementation, the information transmission method shown in FIG. 8 further includes the following steps: If the first network device determines to perform interference coordination, step S104 is performed; or if the first network device determines not to perform interference coordination, this procedure ends.

S104: The first network device performs the interference coordination.

In an optional implementation, step S104 includes: The first network device determines a first area based on uplink interference generated to the first network device separately by the terminals served by the at least one second network device; and determines a beam weight of a receive beam, where the beam weight is used to determine a beam direction, and a main lobe of the receive beam points to an area other than the first area, or a null direction of the receive beam points to the first area.

Optionally, interference strength of uplink interference generated to the first network device by a terminal served by a second network device in the first area is greater than a preset value. For example, interference strength of uplink interference is an INR. That the first network device determines the first area may include: The first network device determines a plurality of areas based on location information of terminals separately served by at least one network device; and the first network device may determine, as the first area from the plurality of areas, one or more areas in which an INR generated to the first network device by the terminals served by the second network device is greater than the preset value. Optionally, the preset value is an empirical value, is defined in a protocol, or is determined by the first network device.

Optionally, the first area is an area in which one or more second network devices are located, where interference strength of uplink interference generated to the first network device by terminals served by the one or more second network devices is greater than the preset value. For example, interference strength of uplink interference is an INR. That the first network device determines the first area may include: The first network device determines one or more second network devices, where the INR generated to the first network device by terminals served by the one or more second network devices is greater than the preset value; and the first network device determines, as the first area, an area in which the one or more second network devices are located or an area in which the terminals separately served by the one or more second network devices are located.

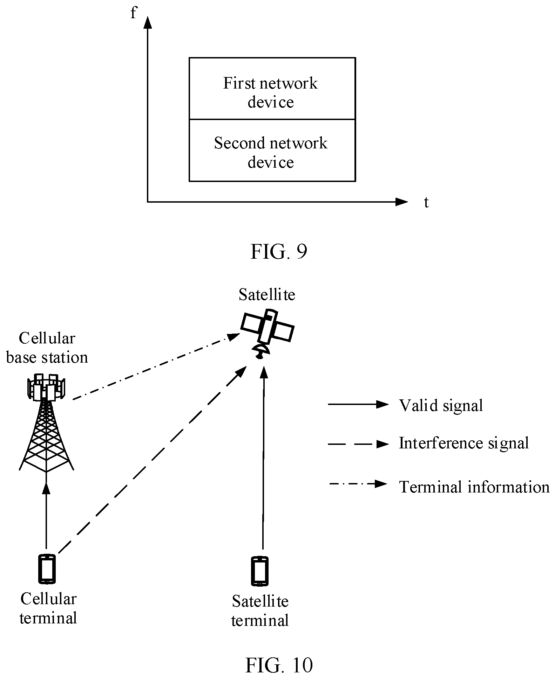

In another optional implementation, step S104 includes: The first network device configures a band of uplink transmission, where the band of uplink transmission of the first network device does not overlap a band of uplink transmission of the at least one second network device. For example, the band of uplink transmission of the first network device and a band of uplink transmission of the second network device are shown in FIG. 9, and the two bands do not overlap.

It can be learned that, in the information processing method in FIG. 8, the first network device may determine, by performing steps S101 and S102, the total uplink interference generated by the terminals served by the one or more second network devices, thereby helping perform corresponding interference coordination based on the total uplink interference. Further, the first network device may determine, by performing step S103, whether interference coordination needs to be performed. If it is determined that interference coordination needs to be performed, the first network device may perform interference coordination including but not limited to the interference coordination described in step S104, to reduce interference generated to the first network device by the terminals served by the at least one second network device, and also help uplink intra-frequency coexistence between the first network device and the at least one second network device or the communication system in which the at least one second network device is located, thereby improving spectrum utilization.

FIG. 10 is a diagram of another information processing method according to an embodiment of this application. In FIG. 10, for example, a first network device is a satellite, a terminal served by the first network device is a satellite terminal, a second network device is a network device within a coverage area or a visible area of the satellite, for example, a cellular base station within the coverage area or the visible area of the satellite, and a terminal served by the second network device is a cellular terminal. Because the cellular terminal usually uses an omnidirectional antenna, and an antenna transmit gain is fixed and does not change with an angle, the satellite does not need to send its own ephemeris information to the cellular base station, so that the cellular base station determines the antenna transmit gain and EIRP information of the cellular terminal.

As shown in FIG. 10, the cellular base station sends terminal information to the satellite, where the terminal information includes a quantity of cellular terminals served by the cellular base station, and location information and EIRP information of the cellular terminals served by the cellular base station. Another cellular base station within the coverage area or the visible area of the satellite may also send terminal information to the satellite. The satellite receives the terminal information sent by the cellular base station and the terminal information sent by the another cellular base station, and determines, based on the received terminal information, total uplink interference generated to the satellite by the cellular terminals served by the cellular base station and the another cellular base station. Optionally, the satellite determines, based on the total uplink interference, whether to perform interference coordination; and if it is determined to perform interference coordination, the satellite performs interference coordination; or if it is determined not to perform interference coordination, this procedure ends. For related content in the information processing method shown in FIG. 10, for example, content of the terminal information and an optional implementation of determining, based on the received terminal information, the total uplink interference generated to the satellite by the cellular terminals served by the cellular base station and the another cellular base station, refer to related content in the information processing method shown in FIG. 8. Details are not described herein again.

Optionally, in the information processing method shown in FIG. 10, location information of the cellular base station may be used as or equivalent to location information of the cellular terminal served by the cellular base station, and is sent to the satellite. In other words, the location information of the cellular terminal served by the cellular base station may be the location information of the cellular base station.

For example, uplink interference generated to the satellite by the terminal served by the cellular base station is an INR. For determining, by the satellite, the INR generated to the satellite by the cellular terminal served by the cellular base station, refer to the foregoing formula (1). Compared with determining G/T in the method in FIG. 8, in the method in FIG. 10, the satellite needs to determine G/T based on the location information of the cellular base station, the ephemeris information of the satellite, and an antenna pattern. Compared with determining the free-space path loss $PL_{FS}$ in the method in FIG. 8, in this embodiment of this application, the satellite needs to determine a free-space path loss based on the location information of the cellular base station and the another cellular base station and the ephemeris information of the satellite.

Optionally, compared with the interference threshold used in the method in FIG. 8, in the method in FIG. 10, a recommended value of an interference threshold of a satellite system provided by the ITU is used. If total uplink interference I/N calculated by the satellite is less than or equal to the recommended value of the interference threshold, the satellite does not need to perform interference coordination, and the satellite may coexist with a terrestrial cellular system in an uplink intra-frequency manner. If total uplink interference I/N calculated by the satellite is greater than the recommended value of the interference threshold, the satellite may coexist with a terrestrial cellular system in an uplink intra-frequency manner, and the satellite needs to perform interference coordination, or the satellite does not coexist with a terrestrial cellular system in an uplink intra-frequency manner.

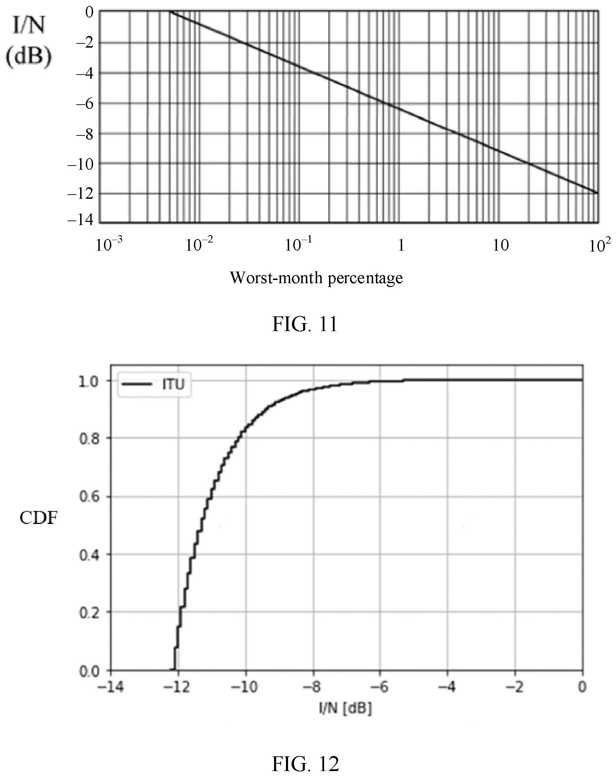

Optionally, compared with the CDF curve of the interference threshold I/N used in the method in FIG. 8, in the method in FIG. 10, a CDF curve of an interference threshold I/N of a satellite system provided by the ITU is used. For example, the ITU recommends that the interference from the fixed service system like the cellular base station to the satellite system is limited as follows: For example, a statistical period is an annual period; for more than 20% of the time in any month, a BER does not exceed $1 \times 10^{-6}$, and a corresponding interference threshold I/N is -10 dB; for more than 0.03% of the time in any month, a BER does not exceed $1 \times 10^{-4}$, and a corresponding interference threshold I/N is -2.4 dB; for more than 0.005% of the time in any month, a BER does not exceed $1 \times 10^{-3}$, and a corresponding interference threshold I/N is 0 dB; and for more than 100% of the time in any month, a BER does not exceed $1 \times 10^{-7}$, and a corresponding interference threshold I/N is -12 dB. Correspondingly, the foregoing limitation on the interference threshold provided by the ITU may be represented as a correspondence between a worst-month percentage and I/N (dB) shown in FIG. 11. The worst-month percentage is a percentage of a month corresponding to an interference threshold that does not cause the BER to exceed a specific value. The correspondence shown in FIG. 11 may be converted into a CDF curve, as shown in FIG. 12. Correspondingly, the satellite determines, based on the CDF curve of the total uplink interference I/N and the CDF curve of the interference threshold I/N, whether to perform interference coordination.

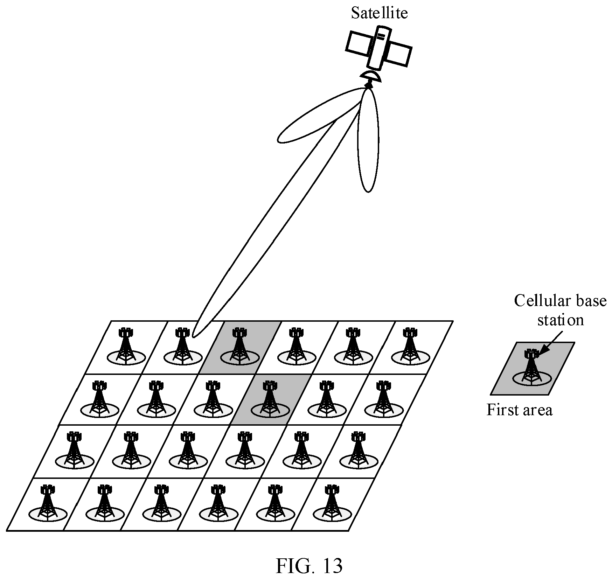

In the method shown in FIG. 10, for an optional implementation in which the satellite performs interference coordination, refer to related descriptions of step S104 in the foregoing method. Details are not described herein again. For example, FIG. 13 is a diagram of a beam weight. Diamond areas in FIG. 13 are used as a plurality of areas determined by the satellite based on location information of a terminal served by each cellular base station. The satellite determines, as the first area based on uplink interference generated to a satellite by a terminal served by a cellular base station in each diamond area, an area whose interference strength is greater than a preset value, for example, a gray-filled area in FIG. 13. In this way, a main lobe of a receive beam of the satellite does not point to the first area. For example, a null direction of the receive beam is adjusted to point to the first area, so that uplink interference generated by uplink sending of a cellular terminal to uplink receiving of the satellite can be reduced.

It can be learned that, in a satellite-terrestrial uplink interference scenario shown in FIG. 10, the terrestrial cellular system is an interfering party, and the satellite system is an interfered party. After the cellular base station periodically reports terminal information related to the cellular base station to the satellite system, the satellite may calculate total uplink interference based on the terminal information. The satellite determines, based on the calculated total uplink interference, whether to perform interference coordination or whether to coexist with the terrestrial cellular system in an uplink intra-frequency manner. Therefore, when the total uplink interference is less than or equal to the interference threshold, the terrestrial cellular system can coexist with the satellite system in an uplink intra-frequency manner, to improve spectrum utilization. If the total uplink interference is greater than the interference threshold, the terrestrial cellular system cannot coexist with the satellite system in an uplink intra-frequency manner, and the uplink interference of the terrestrial cellular system to the satellite system can be reduced by designing the beam weight.

In addition, a scenario considered in this embodiment of this application is interference generated by uplink sending of a cellular terminal to uplink receiving of a satellite, instead of interference generated by uplink sending of a gateway station of the satellite to uplink receiving of a cellular base station. For example, in the interference generated by uplink sending of the gateway station of the satellite to uplink receiving of the cellular base station, the cellular base station receives related information of the gateway station. If the analysis is applied to the satellite-terrestrial uplink interference scenario, accuracy of interference analysis is greatly affected. In addition, in this embodiment of this application, interference analysis is performed, and then an interference coordination operation is performed. This also avoids a problem of low spectrum utilization caused by merely enabling a cellular base station to avoid a specific frequency domain resource to reduce uplink interference to the satellite.

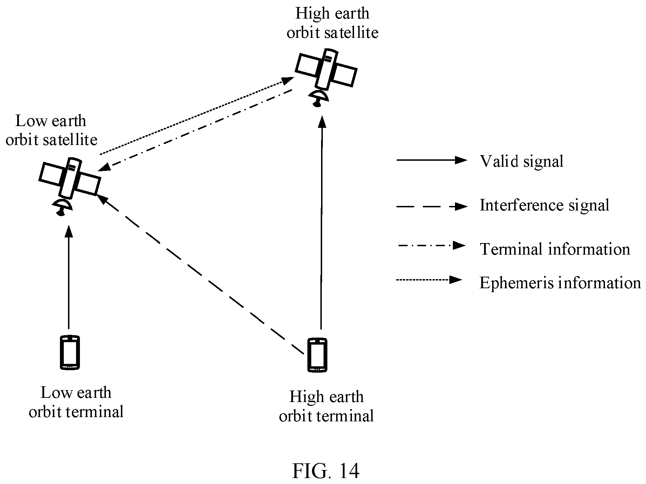

FIG. 14 is a diagram of another information processing method according to an embodiment of this application. In FIG. 14, for example, a first network device is a low earth orbit satellite, a terminal served by the first network device is a low earth orbit terminal, a second network device is a high earth orbit satellite whose served geographical area is within a coverage area or a visible area of the low earth orbit satellite, and a terminal served by the second network device is a high earth orbit terminal. Location information of the terminals served by the second network device is location information of the geographical area served by the high earth orbit satellite, and the terminals served by the second network device are terminals served by the high earth orbit satellite in the geographical area. Because the high earth orbit terminal uses a non-omnidirectional antenna, and an antenna transmit gain is not fixed and changes with an angle, the low earth orbit satellite needs to send its own ephemeris information to the high earth orbit satellite, so that the high earth orbit satellite determines the antenna transmit gain and EIRP information of the high earth orbit terminal.

The geographical area served by the high earth orbit satellite is a geographical area covered by a beam of the high earth orbit satellite. If the high earth orbit satellite uses a beam hopping mechanism, N beams of the high earth orbit satellite point to N geographical areas within the coverage area in a time period [t0, t1], and point to other N geographical areas within the coverage area in a time period [t1, t2] (which may be different from or the same as the N geographical areas pointed to in the time period [t0, t1]). Beam position scheduling information of the high earth orbit satellite is beam direction (direction) information of the high earth orbit satellite in different time periods in a period of time. The ephemeris information of the low earth orbit satellite may be an orbital parameter ephemeris, or may be a position and velocity state vector ephemeris. The orbital parameter ephemeris includes parameters such as a semi-major axis (semi-major axis) of the satellite, an eccentricity (eccentricity), an argument of periapsis (argument of periapsis), a longitude of ascending node (longitude of ascending node), an inclination (inclination), and a mean anomaly (mean anomaly) of epoch time (epoch time). The velocity state vector ephemeris includes a three-dimensional position vector and a three-dimensional velocity vector of the satellite at the epoch time.

In the information processing method shown in FIG. 14, the low earth orbit satellite sends ephemeris information of the low earth orbit satellite to at least one high earth orbit satellite. The at least one high earth orbit satellite determines, based on the ephemeris information, EIRP information of terminals served by the at least one high earth orbit satellite in a served geographical area; the at least one high earth orbit satellite sends terminal information to the low earth orbit satellite, where the terminal information includes location information of the geographical area served by the at least one high earth orbit satellite, a quantity of cellular terminals served by the at least one high earth orbit satellite in the geographical area, and EIRP information; and the low earth orbit satellite determines, based on the received terminal information, total uplink interference generated to the low earth orbit satellite by the cellular terminals served by the at least one high earth orbit satellite in the geographical area. Optionally, the low earth orbit satellite determines, based on the total uplink interference, whether to perform interference coordination; and if it is determined to perform interference coordination, the low earth orbit satellite performs interference coordination; or if it is determined not to perform interference coordination, this procedure ends. For related content in the information processing method shown in FIG. 14, for example, an optional implementation in which the low earth orbit satellite determines the total uplink interference generated to the low earth orbit satellite by the cellular terminals served by the high earth orbit satellite in the geographical area, refer to related content in the information processing method shown in FIG. 8. Details are not described herein again.

Optionally, in the information processing method shown in FIG. 14, the location information of the geographical area served by the high earth orbit satellite may be used as or equivalent to location information of the terminals served by the high earth orbit satellite in the geographical area, and is sent to the low earth orbit satellite. The location information of the geographical area served by the high earth orbit satellite may be beam position scheduling information in [t1, t2], where the beam position scheduling information is a two-dimensional matrix formed by a time unit index and a beam position index of a beam position scheduled by the high earth orbit satellite, or is a structure formed by three elements: a time unit index, a beam normal direction of a beam position scheduled by the high earth orbit satellite, and a beam coverage radius. Information about the beam normal direction of the beam position scheduled by the high earth orbit satellite may include a longitude and a latitude, or may include an azimuth and a pitch angle. An average antenna gain of the terminals served by the high earth orbit satellite in the served geographical area is determined based on a direction of the low earth orbit satellite relative to the beam position scheduled by the high earth orbit satellite. Frequency domain configuration information of the terminals served by the high earth orbit satellite is associated with the beam position scheduled by the high earth orbit satellite, or may be referred to as being associated with the beam position scheduling information of the high earth orbit satellite. The beam position scheduled by the high earth orbit satellite is determined based on the beam position scheduling information of the high earth orbit satellite. For the beam position scheduling information, refer to the foregoing description. Details are not described herein again. The frequency domain configuration information includes a band, a resource block (resource block, RB), or a subcarrier occupied by uplink scheduling (or uplink transmission) of the high earth orbit satellite.

For example, uplink interference generated to the low earth orbit satellite by the terminals served by the high earth orbit satellite in the geographical area is an INR. For determining, by the low earth orbit satellite, the INR generated to the low earth orbit satellite by the terminals served by the high earth orbit satellite in the geographical area, refer to the foregoing formula (1). Compared with determining G/T in the method in FIG. 8, in the method in FIG. 14, the low earth orbit satellite needs to determine G/T based on the location information of the geographical area, the ephemeris information of the low earth orbit satellite, and an antenna pattern. Compared with determining the free-space path loss $PL_{FS}$ in the method in FIG. 8, in the method in FIG. 14, the low earth orbit satellite needs to determine a free-space path loss based on the location information of the geographical area and the ephemeris information of the low earth orbit satellite.

Optionally, the method in FIG. 14 may also use a recommended value of the interference threshold of the satellite system provided by the ITU. If total uplink interference I/N calculated by the low earth orbit satellite is less than or equal to the recommended value of the interference threshold, the low earth orbit satellite does not need to perform interference coordination, and the low earth orbit satellite may coexist with the high earth orbit satellite system in an uplink intra-frequency manner. If total uplink interference I/N calculated by the low earth orbit satellite is greater than the recommended value of the interference threshold, the low earth orbit satellite may coexist with the high earth orbit satellite system in an uplink intra-frequency manner, and the low earth orbit satellite needs to perform interference coordination, or the low earth orbit satellite does not coexist with the high earth orbit satellite system in an uplink intra-frequency manner.

Optionally, the method in FIG. 14 uses a CDF curve of an interference threshold I/N of the high earth orbit satellite system provided by the ITU, for example, a CDF curve of interference I/N from the terminals served by the high earth orbit satellite to the low earth orbit satellite system, which is recommended by the ITU and is from another satellite service system. Correspondingly, the low earth orbit satellite determines, based on the CDF curve of the total uplink interference I/N and the CDF curve of the interference threshold I/N, whether to perform interference coordination.

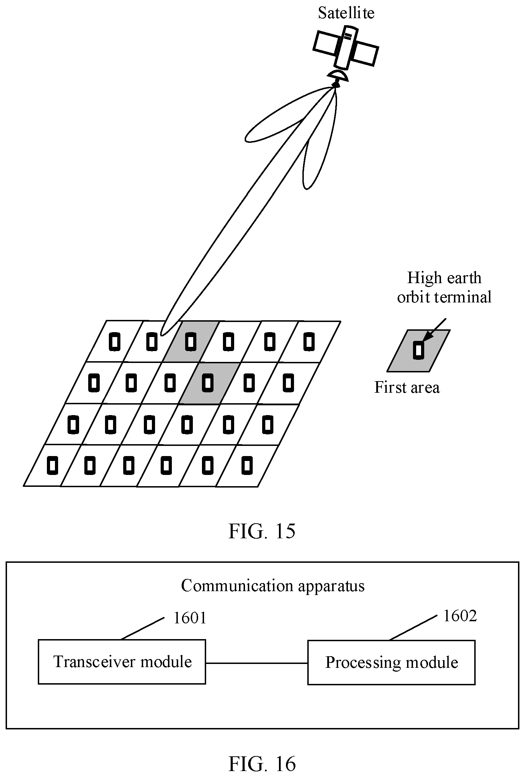

In the method in FIG. 14, for an optional implementation in which the low earth orbit satellite performs interference coordination, refer to related descriptions of step S104 in the foregoing method. For example, FIG. 15 is another diagram of a beam weight. Diamond areas in FIG. 15 are used as a plurality of areas determined by the low earth orbit satellite based on location information of high earth orbit terminals served by the high earth orbit satellite. The low earth orbit satellite determines, as the first area based on uplink interference generated to the satellite by a high earth orbit terminal in each diamond area, an area whose interference strength is greater than a preset value, for example, a gray-filled area in FIG. 15. In this way, the low earth orbit satellite designs a weight of a receive beam, so that a main lobe of the receive beam of the low earth orbit satellite does not point to the first area. For example, a null direction of the receive beam is adjusted to point to the first area. Therefore, uplink interference generated by uplink sending of the high earth orbit terminal to uplink receiving of the low earth orbit satellite can be reduced.

For another example, the low earth orbit satellite determines the INR generated to the low earth orbit satellite by the terminals served by each high earth orbit satellite in each geographical area, and determines or identifies a geographical area whose interference strength is greater than a preset value. Then, the low earth orbit satellite determines, based on frequency domain configuration information that is in the terminal information sent by the high earth orbit satellite and that is associated with the geographical area, frequency domain configuration information corresponding to the geographical area whose interference strength is greater than the preset value. When the receive beam of the low earth orbit satellite points to the geographical area whose interference strength is greater than the preset value, frequency domain resources are scheduled, so that an uplink band of the low earth orbit satellite does not overlap a band or frequency domain of uplink transmission of the high earth orbit satellite, as shown in FIG. 9.

It can be learned that, in an uplink interference scenario between the high earth orbit satellite and the low earth orbit satellite shown in FIG. 14, the high earth orbit satellite system is an interfering party, and the low earth orbit satellite system is an interfered party. After the high earth orbit satellite periodically reports terminal information (such as the beam position scheduling information, user information of a scheduled beam position, and frequency domain configuration information associated with the scheduled beam position) related to the low earth orbit satellite to the low earth orbit satellite system, the low earth orbit satellite may calculate total uplink interference based on the interference information. If the total uplink interference is less than or equal to the interference threshold, the low earth orbit satellite system can coexist with the high earth orbit satellite system in an uplink intra-frequency manner, to improve spectrum utilization. If the total uplink interference is greater than the interference threshold, the low earth orbit satellite system may reduce the uplink interference of the high earth orbit terminal to the low earth orbit satellite by designing a beam weight or by using a non-overlapping band.

In addition, a scenario considered in this embodiment of this application is interference generated by uplink sending of the high earth orbit terminal to uplink receiving of the low earth orbit satellite, instead of downlink interference between the high earth orbit satellite and the low earth orbit satellite, for example, interference generated by downlink sending of the low earth orbit satellite to the high earth orbit terminal, or interference generated by downlink sending of the high earth orbit satellite to the low earth orbit terminal. In addition, in this embodiment of this application, interference analysis is performed, and then an interference coordination operation is performed. This also avoids a problem of low spectrum utilization caused by merely enabling the high earth orbit terminal to avoid a specific frequency domain resource to reduce uplink interference to the low earth orbit satellite.

In another embodiment, the information processing method in FIG. 8 may be further applied to an interference scenario of a large tower and a small tower, to analyze total uplink interference generated to uplink receiving of the large tower by uplink sending of terminals served by the small tower. For example, the second network device includes but is not limited to the micro base station 110c shown in FIG. 3, the terminals served by the second network device include but are not limited to the printer 120e, the mobile phone 120f, and the computer 120g shown in FIG. 3, the first network device is the macro base station 110b shown in FIG. 3, and the terminals served by the first network device include but are not limited to the mobile phone 120a shown in FIG. 3. The macro base station 110b receives terminal information of at least one micro base station, where the terminal information includes a quantity of terminals served by the at least one micro base station, and location information and equivalent isotropic radiated power information of the terminals served by the at least one micro base station; and determines, based on the terminal information, total uplink interference generated to the macro base station 110b by the terminals served by the at least one micro base station. In this way, the macro base station 110b can obtain the total uplink interference generated to uplink receiving of the macro base station 110b by uplink sending of the terminals served by the at least one micro base station, and further, the interference coordination operation described in this embodiment of this application may be used to reduce interference and improve spectrum utilization. Optionally, the optional implementations in the method in FIG. 8 may be further used in this embodiment of this application. Details are not described herein again.

In another embodiment, the information processing method in FIG. 8 may be further applied to the interference scenario of the large tower and the small tower, to analyze total uplink interference generated to uplink receiving of the small tower by uplink sending of terminals served by the large tower. For example, the first network device includes but is not limited to the micro base station 110c shown in FIG. 3, the terminals served by the first network device include but are not limited to the printer 120e, the mobile phone 120f, and the computer 120g shown in FIG. 3, the second network device is the macro base station 110b shown in FIG. 3, and the terminals served by the second network device include but are not limited to the mobile phone 120a shown in FIG. 3. The micro base station 110c receives terminal information of the macro base station, where the terminal information includes a quantity of terminals served by the macro base station, and location information and equivalent isotropic radiated power information of the terminals; and determines, based on the terminal information, total uplink interference generated to the micro base station 110c by the terminals served by the macro base station. In this way, the micro base station 110c can obtain the total uplink interference generated to uplink receiving of the micro base station 110c by uplink sending of the terminals served by the macro base station, and further, the interference coordination operation described in this embodiment of this application may be used to reduce interference and improve spectrum utilization. Optionally, the optional implementations in the method in FIG. 8 may be further used in this embodiment of this application. Details are not described herein again.

In the foregoing embodiments provided in this application, the solutions of the information processing method provided in embodiments of this application are separately described from a perspective of the devices and from a perspective of interaction between the devices. It may be understood that, to implement the foregoing functions each device, for example, the first network device, the second network device, the terminal, the low earth orbit satellite, or the geostationary earth orbit satellite, includes a corresponding hardware structure and/or a corresponding software unit for performing the foregoing functions. A person of ordinary skill in the art should easily be aware that, in combination with units and algorithm steps of the examples described in embodiments disclosed in this application, this application can be implemented in a hardware form or in a form of combining hardware with computer software. Whether a function is performed in a manner of hardware or hardware driven by computer software depends on particular applications and design constraints of the technical solutions. A person skilled in the art may use different methods to implement the described functions for each particular application, but it should not be considered that the implementation goes beyond the scope of this application.

FIG. 16 is a diagram of a structure of a communication apparatus according to an embodiment of this application. The communication apparatus shown in FIG. 16 includes a transceiver module 1601 and a processing module 1602.

In an embodiment, in a design, the communication apparatus is a first network device or a related apparatus in a first network device.

For example, the transceiver module 1601 is configured to receive terminal information of at least one second network device, where the terminal information includes a quantity of terminals served by the at least one second network device, and location information and equivalent isotropic radiated power information of the terminals served by the at least one second network device. The processing module 1602 is configured to determine, based on the terminal information, total uplink interference generated to the first network device by the terminals served by the at least one second network device.

Optionally, when the communication apparatus is the first network device or the related apparatus of the first network device, the communication apparatus is configured to implement functions of the first network device in the embodiments shown in FIG. 8 to FIG. 15 and optional implementations.

In a design, the communication apparatus is a second network device or a related apparatus in a second network device.

For example, the transceiver module 1601 is configured to send terminal information, where the terminal information includes a quantity of terminals served by the second network device, and location information and equivalent isotropic radiated power EIRP information of the served terminals; and the terminal information is used to determine uplink interference generated to a first network device by the terminals served by the second network device. Optionally, the communication apparatus may further include a processing module 1602, configured to determine the terminal information.

Optionally, when the communication apparatus is the second network device, the communication apparatus is configured to implement functions of the second network device in the embodiments shown in FIG. 8 to FIG. 15 and optional implementations.

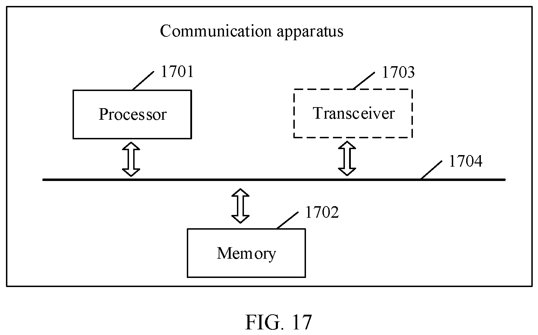

FIG. 17 is a diagram of a structure of another communication apparatus according to an embodiment of this application. The communication apparatus shown in FIG. 17 includes at least one processor 1701 and a memory 1702, and optionally, may further include a transceiver 1703. A specific connection medium between the processor 1701 and the memory 1702 is not limited in embodiments of this application. In FIG. 17, for example, the memory 1702 and the processor 1701 are connected through a bus 1704. The bus 1704 is represented by using a thick line in the figure. A manner of connection between other components is merely an example for description, and is not limited thereto. The bus 1704 may be classified into an address bus, a data bus, a control bus, and the like. For ease of representation, only one thick line is used to represent the bus in FIG. 17, but this does not mean that there is only one bus or only one type of bus.

The processor 1701 may have a data transceiver function, and can communicate with another device. In the apparatus shown in FIG. 17, an independent data transceiver module, for example, the transceiver 1703, may further be disposed and is configured to receive and send data. When communicating with the another device, the processor 1701 may transmit data through the transceiver 1703.

In an example, when the first network device uses a form shown in FIG. 17, the processor 1701 in FIG. 17 may invoke computer-executable instructions stored in the memory 1702, so that the first network device performs the method performed by the first network device in any one of the embodiments in FIG. 8 to FIG. 15.

In an example, when the second network device uses a form shown in FIG. 17, the processor 1701 in FIG. 17 may invoke computer-executable instructions stored in the memory 1702, so that the second network device performs the method performed by the second network device in any one of the embodiments in FIG. 8 to FIG. 15.

An embodiment of this application further provides a communication system. The system may include the first network device and the at least one second network device in FIG. 8 to FIG. 15. For details, refer to the foregoing method embodiments.

The solutions described in this application may be implemented in various manners. For example, the technologies may be implemented by hardware, software, or a combination thereof. For hardware implementation, a processing module configured to perform these technologies at a communication apparatus (for example, a base station, a terminal, a network entity, or a chip) may be implemented in one or more general-purpose processors, a digital signal processor (digital signal processor, DSP), a digital signal processing device, an application-specific integrated circuit (application-specific integrated circuit, ASIC), a programmable logic device, a field programmable gate array (field programmable gate array, FPGA), or another programmable logic apparatus, a discrete gate or transistor logic, a discrete hardware component, or any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another appropriate type.

This application further provides a computer-readable medium. The computer-readable medium stores instructions. When the instructions are executed by a computer, functions of any one of the foregoing method embodiments are implemented.

This application further provides a computer program product. When the computer program product is executed by a computer, functions of any one of the foregoing method embodiments are implemented.

All or a part of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the apparatus provided in embodiments of this application may also correspondingly implement these features or functions. Details are not described herein.

A person skilled in the art may further understand that various illustrative logical blocks (illustrative logical blocks) and steps (steps) that are listed in embodiments of this application may be implemented by electronic hardware, computer software, or a combination thereof. Whether the functions are implemented by using hardware or software depends on particular applications and a design requirement of the entire system. A person skilled in the art may use various methods to implement the functions for corresponding applications, but it should not be considered that the implementation goes beyond the scope of embodiments of this application.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

It may be understood that, in this application, "when", "if", and "in a case of" mean that an apparatus performs corresponding processing in an objective case, but do not constitute any limitation on time, do not require the apparatus to necessarily have a determining action during implementation, and do not mean any other limitation.

In this application, an element represented in a singular form is intended to represent "one or more", but does not represent "one and only one", unless otherwise specified. In this application, unless otherwise specified, "at least one" is intended to represent "one or more", and "a plurality of" is intended to represent "two or more".

In addition, the terms "system" and "network" may be used interchangeably in this specification. The term "and/or" in this specification describes only an association relationship between associated objects and represents that three relationships may exist. For example, A and/or B may represent the following three cases: Only A exists, both A and B exist, and only B exists. A may be singular or plural, and B may be singular or plural.

"Predefine" in this application may be understood as "define", "define in advance", "store", "pre-store", "pre-negotiate", "pre-configure", "solidify", or "pre-burn".

A person of ordinary skill in the art may understand that, for the purpose of convenient and brief description, for a detailed working process of the foregoing system, apparatus, and unit, refer to a corresponding process in the foregoing method embodiments. Details are not described herein again.

For same or similar parts in embodiments of this application, refer to each other. In various embodiments of this application and various implementations/implementation methods in various embodiments, unless otherwise specified or a logic conflict occurs, terms and/or descriptions are consistent and may be mutually referenced between different embodiments and between the implementations/implementation methods in the embodiments. Technical features in the different embodiments and the implementations/implementation methods in the embodiments may be combined based on an internal logic relationship thereof to form a new embodiment, implementation, or implementation method. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1.  An information processing method, applied to a first network device or a chip in a first network device, comprising:

    receiving terminal information of at least one second network device, wherein the terminal information comprises a quantity of terminals served by the at least one second network device, and location information and equivalent isotropic radiated power information of the served terminals; and
    determining, based on the terminal information, total uplink interference generated to the first network device by the terminals served by the at least one second network device.

2.  The method according to claim 1, wherein the terminal information further comprises frequency domain configuration information of uplink transmission of the at least one second network device, and the determining of, based on the terminal information, the total uplink interference generated to the first network device by the terminals served by the at least one second network device comprises:

    determining a receive antenna gain based on the location information of terminals served by the second network device; determining uplink interference generated to the first network device by the terminals served by the second network device based on the equivalent isotropic radiated power information of the terminals served by the second network device, the receive antenna gain, and the frequency domain configuration information; and determining, based on the uplink interference generated to the first network device by the terminals served by the second network device, the total uplink interference generated to the first network device by the terminals served by the at least one second network device.

3.  The method according to claim 1 or 2, further comprising:
    determining, based on the total uplink interference generated to the first network device by the terminals served by the at least one second network device, whether to perform interference coordination.

4. The method according to claim 3, wherein if it is determined to perform the interference coordination, the method further comprises:

determining a first area based on uplink interference generated to the first network device by the terminals served by the at least one second network device, wherein strength of uplink interference generated to the first network device by terminals served by a second network device in the first area is greater than a preset value; and determining a beam weight of a receive beam, wherein a main lobe of the receive beam points to an area other than the first area, or a null direction of the receive beam points to the first area.

5. The method according to claim 3, wherein if it is determined to perform the interference coordination, the method further comprises:
configuring a band of uplink transmission, wherein the band of uplink transmission does not overlap a band of uplink transmission of the at least one second network device.

6. The method according to any one of claims 1 to 5, wherein

the first network device is a satellite, and the at least one second network device is a network device within a coverage area or a visible area of the satellite; and location information of the second network device is used as the location information of the terminals served by the second network device.

7. The method according to any one of claims 1 to 5, wherein

the first network device is a low earth orbit satellite, and the at least one second network device is a geostationary earth orbit satellite whose served geographical area is within a coverage area or a visible area of the low earth orbit satellite; and
the location information of the terminals served by the second network device is location information of the geographical area, and the terminals served by the second network device are terminals served by the geostationary earth orbit satellite in the geographical area.

8. The method according to any one of claims 1 to 7, wherein the equivalent isotropic radiated power information comprises an average antenna gain of the terminals served by the second network device, and the equivalent isotropic radiated power information further comprises average transmit power or statistical information of transmit power of the terminals served by the second network device.

9. An information processing method, applied to a second network device or a chip in a second network device, comprising:

transmitting terminal information, wherein the terminal information comprises a quantity of terminals served by the second network device, and location information and equivalent isotropic radiated power information of the served terminals; and
the terminal information is used to determine uplink interference generated to a first network device by the terminals served by the second network device.

10. The method according to claim 9, wherein the terminal information further comprises frequency domain configuration information of uplink transmission of the second network device.

11. The method according to claim 9 or 10, wherein

the first network device is a satellite, and the second network device is a network device within a coverage area or a visible area of the satellite; and
location information of the second network device is used as the location information of the terminals served by the second network device.

12. The method according to claim 9 or 10, wherein

the first network device is a low earth orbit satellite, and the second network device is a geostationary earth orbit satellite whose served geographical area is within a coverage area or a visible area of the low earth orbit satellite;

and
the location information of the terminals served by the second network device is location information of the geographical area, and the terminals served by the second network device are terminals served by the geostationary earth orbit satellite in the geographical area.

13. The method according to claim 12, wherein before transmitting the terminal information, the method further comprises:

receiving ephemeris information from the low earth orbit satellite; and
determining, based on the ephemeris information, equivalent isotropic radiated power information of the terminals served by the geostationary earth orbit satellite in the geographical area.

14. The method according to any one of claims 9 to 13, wherein the equivalent isotropic radiated power information comprises an average antenna gain of the terminals served by the second network device, and the equivalent isotropic radiated power information further comprises average transmit power or statistical information of transmit power of the terminals served by the second network device.

15. A communication system, comprising:

an apparatus configured to perform the method according to any one of claims 1 to 8, and
at least one apparatus configured to perform the method according to any one of claims 9 to 14.

16. A communication apparatus, comprising one or more functional units, wherein the one or more functional units are configured to perform the method according to any one of claims 1 to 8 or the method according to any one of claims 9 to 14.

17. A communication apparatus, comprising a processor, wherein the processor invokes a computer program stored in a memory, so that the communication apparatus implements the method according to any one of claims 1 to 8 or the method according to any one of claims 9 to 14.

18. A communication apparatus, comprising a processor and an interface circuit, wherein the interface circuit is configured to: receive a signal from a communication apparatus other than the communication apparatus and transmit the signal to the processor, or transmit a signal from the processor to a communication apparatus other than the communication apparatus, and the processor is configured to implement the method according to any one of claims 1 to 8 or the method according to any one of claims 9 to 14 through a logic circuit or by executing code instructions.

19. A computer-readable storage medium, wherein the computer-readable storage medium stores a computer program; and when the computer program is run, the method according to any one of claims 1 to 8 or the method according to any one of claims 9 to 14 is implemented.

Satellite or unmanned
aircraft system platform

Feeder link

Service link

Public data
network

Terminal

Gateway station

FIG. 1

Satellite or
unmanned aircraft
system platform

Satellite or
unmanned aircraft
system platform

Inter-satellite link

Feeder link

Feeder link

Service
link

Public data
network

Terminal

Gateway station

FIG. 2

FIG. 3

FIG. 4

Satellite

Coverage range
of the satellite

Visible range
of the satellite

FIG. 5

LEO satellite

Cellular
base
station

Valid signal

Interference signal

Cellular
terminal

LEO satellite
terminal

FIG. 6

GEO
satellite

LEO
satellite

→ Valid signal

→ Interference signal

LEO satellite
terminal

GEO satellite
terminal

FIG. 7

First network device

At least one
second network device

...

S101: Terminal information

S102: The first network device
determines, based on the terminal
information, total uplink interference
generated to the first network device by
terminals served by the at least one
second network device

S103: The first network device
determines, based on the total uplink
interference generated to the first network
device by the terminals served by the at
least one second network device, whether
to perform interference coordination

S104: The first network device performs
the interference coordination

FIG. 8

f

First network
device

Second network
device

t

FIG. 9

Satellite

Cellular
base station

Valid signal

Interference signal

Terminal information

Cellular
terminal

Satellite
terminal

FIG. 10

FIG. 11

FIG. 12

Satellite

Cellular base
station

First area

FIG. 13

High earth
orbit satellite

Low earth
orbit satellite

Valid signal

Interference signal

Terminal information

Ephemeris information

Low earth
orbit terminal

High earth
orbit terminal

FIG. 14

Satellite

High earth
orbit terminal

First area

FIG. 15

Communication apparatus

1601

Transceiver module

1602

Processing module

FIG. 16

Communication apparatus

1701

Processor

1703

Transceiver

1704

1702

Memory

FIG. 17

## INTERNATIONAL SEARCH REPORT

| International application No. |
| --- |
| **PCT/CN2024/118025** |

### A. CLASSIFICATION OF SUBJECT MATTER

H04B 17/345(2015.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, VCN, CNKI, ENTXT, ENTXTC, VEN, DWPI: 网络 基站 卫星 终端 位置 数目 数量 个数 功率 干扰 network BS terminal UE position location number power interference

### C. DOCUMENTS CONSIDERED TO BE RELEVANT

| Category* | Citation of document, with indication, where appropriate, of the relevant passages | Relevant to claim No. |
| --- | --- | --- |
| X | US 2011086665 A1 (KYOCERA CORP.) 14 April 2011 (2011-04-14) description, paragraphs 10-132 | 1, 9, 15-19 |
| A | CN 111800875 A (CLOUDMINDS ROBOTICS CO., LTD.) 20 October 2020 (2020-10-20) entire document | 1-19 |
| A | CN 114765733 A (HUAWEI TECHNOLOGIES CO., LTD.) 19 July 2022 (2022-07-19) entire document | 1-19 |
| A | CN 115604827 A (DATANG MOBILE COMMUNICATIONS EQUIPMENT CO., LTD.) 13 January 2023 (2023-01-13) entire document | 1-19 |
| A | CN 115696390 A (HUAWEI TECHNOLOGIES CO., LTD.) 03 February 2023 (2023-02-03) entire document | 1-19 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 December 2024** | **18 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/118025**

| Patent document cited in search report | | | Publication date (day/month/year) | Patent family member(s) | | | Publication date (day/month/year) |
|---|---|---|---|---|---|---|---|
| US | 2011086665 | A1 | 14 April 2011 | US | 8396505 | B2 | 12 March 2013 |
| | | | | US | 2013150116 | A1 | 13 June 2013 |
| CN | 111800875 | A | 20 October 2020 | WO | 2021249559 | A1 | 16 December 2021 |
| CN | 114765733 | A | 19 July 2022 | WO | 2022152000 | A1 | 21 July 2022 |
| | | | | EP | 4266087 | A1 | 25 October 2023 |
| CN | 115604827 | A | 13 January 2023 | | None | | |
| CN | 115696390 | A | 03 February 2023 | WO | 2023011120 | A1 | 09 February 2023 |
| | | | | EP | 4346304 | A1 | 03 April 2024 |
| | | | | US | 2024172290 | A1 | 23 May 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311290494